# EUROPEAN PATENT APPLICATION

(11) **EP 4 418 668 A1**
(43) Date of publication of application: **21.08.2024**
(21) Application number: 22903307.1
(22) Date of filing: 01.12.2022
(51) Int. Cl.: H04N 23/60

(54) **PHOTOGRAPHING METHOD AND APPARATUS, DEVICE AND STORAGE MEDIUM**

(30) Priority: 08.12.2021 CN 202111491363; 16.03.2022 CN 202210259157
(71) Applicant: Huawei Technologies Co., Ltd., Shenzhen, Guangdong 518129 (CN)
(72) Inventor: LI, Rui, Shenzhen, Guangdong 518129 (CN)
(74) Representative: Thun, Clemens
(86) International application number: PCT/CN2022/135998
(87) International publication number: WO 2023/103885

(57) **Abstract**

This application provides an image shooting method and apparatus, a device, and a storage medium, and relates to the image shooting field. The method includes: determining a first camera module and a second camera module from configured camera modules, and adjusting an exposure frame rate of the first camera module to a first exposure frame rate and adjusting an exposure frame rate of the second camera module to a second exposure frame rate. The second camera module and the first camera module are controlled to perform collaborative image shooting. Specifically, the first camera module is controlled to start to shoot a first frame, and the second camera module is controlled to start to shoot a second frame. Start time of the second frame is first duration later than start time of the first frame, and the first duration is related to the first exposure frame rate and the second exposure frame rate. In the method, the first camera module and the second camera module can perform image shooting at different exposure frame rates, and post-exposure image output of the first camera module and the second camera module may be synchronized at a frame trailer. This ensures an image generation effect of a shot image and reduces power consumption generated by a camera module at an unnecessarily high frame rate.

## Description

This application claims priority to Chinese Patent Application No. 202111491363.6, filed with the China National Intellectual Property Administration on December 8, 2021 and entitled "DISPLAY METHOD AND ELECTRONIC DEVICE", and this application further claims priority to Chinese Patent Application No. 202210259157.0, filed with the China National Intellectual Property Administration on March 16, 2022 and entitled "IMAGE SHOOTING METHOD AND APPARATUS, DEVICE, AND STORAGE MEDIUM", both of which are incorporated herein by reference in their entireties.

### TECHNICAL FIELD

Embodiments of this application relate to the image shooting field, and in particular, to an image shooting method and apparatus, a device, and a storage medium.

### BACKGROUND

In a multi-camera collaborative image shooting scenario, a terminal device (for example, a mobile phone) may be provided with a plurality of camera (camera) modules. During image shooting, the terminal device may simultaneously shoot, by using the plurality of camera modules, a plurality of images that are in a one-to-one correspondence with the plurality of camera modules, and perform fusion processing on the plurality of images to obtain a final shot image.

Currently, when the terminal device performs image shooting by using the plurality of camera modules, the terminal device may control, by using a hard synchronization control technology, timestamps at which the plurality of camera modules start to expose a picture of each frame of image in an image shooting phase to be consistent, to ensure picture consistency of images shot by the plurality of camera modules, so as to improve an image generation effect of a fused image (namely, a final shot image).

However, in the current hard synchronization control technology, a slave camera module needs to follow a master camera module to maintain a same exposure frame rate as the master camera module. However, maintaining the same exposure frame rate by the slave camera module and the master camera module causes high power consumption of the terminal device.

### SUMMARY

This application provides an image shooting method and apparatus, a device, and a storage medium, which are applicable to a scenario in which a terminal device configured with a plurality of (for example, at least two) camera modules performs multi-camera collaborative image shooting, so that a master camera module and a slave camera module perform image shooting at different exposure frame rates, and power consumption generated by the slave camera module at an unnecessarily high frame rate is minimized. This effectively reduces power consumption of the terminal device in the multi-camera collaborative image shooting scenario.

According to a first aspect, this application provides an image shooting method. The method includes: A terminal device determines a first camera module and a second camera module from configured camera modules. The terminal device adjusts an exposure frame rate of the first camera module to a first exposure frame rate, and adjusts an exposure frame rate of the second camera module to a second exposure frame rate, where the first exposure frame rate is different from the second exposure frame rate. The terminal device controls the first camera module to perform image shooting at the first exposure frame rate, and controls the second camera module to perform collaborative image shooting with the first camera module at the second exposure frame rate.

That the terminal device controls the first camera module to perform image shooting at the first exposure frame rate, and controls the second camera module to perform collaborative image shooting with the first camera module at the second exposure frame rate includes: The terminal device controls the first camera module to start to shoot a first frame, and controls the second camera module to start to shoot a second frame, where start time of the second frame is first duration later than start time of the first frame, and the first duration is related to the first exposure frame rate and the second exposure frame rate.

In the image shooting method, the first camera module may be considered as a master camera module, and the second camera module may be considered as a slave camera module. The terminal device configures different exposure frame rates (for example, the first exposure frame rate and the second exposure frame rate) for the master camera module and the slave camera module, so that the master camera module and the slave camera module perform image shooting at the different exposure frame rates. This can minimize power consumption generated by the slave camera module at an unnecessarily high frame rate, and effectively reduces power consumption of the terminal device in a multi-camera collaborative image shooting scenario.

The terminal device controls the first camera module to start to shoot the first frame, and controls the second camera module to start to shoot the second frame, the start time of the second frame is the first duration later than the start time of the first frame, and the first duration is related to the first exposure frame rate and the second exposure frame rate. In this way, time at which the slave camera module starts post-exposure image output can be controlled based on the exposure frame rate of the master camera module and the exposure frame rate of the slave camera module. In the image shooting process, the time at which the slave camera module starts to output the image after exposure is controlled based on the exposure frame rate of the master camera module and the exposure frame rate of the slave camera module. In this way, post-exposure image output of the slave camera module is synchronized with post-exposure image output of the master camera module at a frame trailer. This ensures picture consistency of images shot by the master camera module and the slave camera module, so as to improve an image generation effect of a final shot image.

In some implementations, that the first duration is related to the first exposure frame rate and the second exposure frame rate includes: The first duration is equal to a difference between a frame length corresponding to a third exposure frame rate and a frame length corresponding to the second exposure frame rate. The third exposure frame rate is a largest value in all values that are less than or equal to the second exposure frame rate and that can exactly divide the first exposure frame rate.

For example, the first exposure frame rate is Sm, and the second exposure frame rate is Ss. The third exposure frame rate may be a first frame rate Ss1 that is determined by decreasing a frame rate based on Ss with a reference of Sm and that can exactly divide Sm. In other words, Ss1 is a largest value in all values that are less than or equal to Ss and that can exactly divide Sm. The first duration may be a difference (for example, an absolute value of the difference) between the frame length corresponding to Ss1 and the frame length corresponding to Ss.

Optionally, the method further includes: The terminal device controls the first camera module to send a first signal after a delay of the first duration from the start time of the first frame. That the terminal device controls the second camera module to start to shoot a second frame includes: The terminal device controls the second camera module to sense the first signal based on a configured quantity of intervals of sensing the first signal; and the terminal device controls, in response to the sensed first signal, the second camera module to start to shoot the second frame.

The first signal may be a pulse signal like an XVS pulse signal, a VSYNC pulse signal, or an FSIN pulse signal. That the terminal device controls the first camera module to send a first signal after a delay of the first duration from the start time of the first frame means that the terminal device may control time at which the first camera module sends the first signal to be delayed by the first duration from the start time of the first frame. For example, it is assumed that the first duration is Δt, a corresponding moment at which the first camera module shoots a frame header of the first frame is t. In this case, an actual moment at which the first camera module sends the first signal is (t+Δt).

The terminal device controls the second camera module to sense the first signal based on the configured quantity of intervals of sensing the first signal; and the terminal device controls, in response to the sensed first signal, the second camera module to start to shoot the second frame. In this way, time for starting to shoot the second frame is the first duration later than the first frame, so that time for starting post-exposure image output by the second camera module is controlled based on the exposure frame rate of the first camera module and the exposure frame rate of the second camera module.

Optionally, the method further includes: The terminal device configures, for the second camera module based on the first exposure frame rate and the second exposure frame rate, the quantity of intervals of sensing the first signal, and configures, for the first camera module based on the first exposure frame rate and the second exposure frame rate, time at which the first signal is sent to be delayed by the first duration from the start time of the first frame.

As described above, for example, the first exposure frame rate is Sm, and the second exposure frame rate is Ss. The first duration may be a difference between a frame length corresponding to Ss1 and a frame length corresponding to Ss. The terminal device may configure, for the first camera module, the time at which the first signal is sent to be delayed by the first duration from the start time of the first frame, so as to control the first camera module to send the first signal after a delay of the first duration from the start time of the first frame. The terminal device may further configure, for the second camera module, the quantity of intervals of sensing the first signal, so that the terminal device controls the second camera module to sense the first signal based on the configured quantity of intervals of sensing the first signal.

In some implementations, the quantity, configured for the second camera module, of intervals of sensing the first signal is equal to a value obtained by subtracting 1 from a quotient of dividing the first exposure frame rate by the third exposure frame rate.

Similarly, for example, the first exposure frame rate is Sm, and the second exposure frame rate is Ss. The quantity, configured for the second camera module, of intervals of sensing the first signal may be a value obtained by subtracting 1 from a quotient of dividing Sm by Ss1, where Ss1 is a 1^{st} third exposure frame rate that can exactly divide Sm and that is determined by decreasing a frame rate based on Ss with a reference of Sm. Alternatively, the value may be a value obtained by rounding down a value obtained by dividing Sm by Ss.

In some implementations, the method further includes: The terminal device determines a third camera module from the configured camera modules. The terminal device adjusts an exposure frame rate of the third camera module, so that the exposure frame rate of the third camera module meets: the second exposure frame rate is an integer multiple of the exposure frame rate of the third camera module. The terminal device controls the third camera module to perform collaborative image shooting with the first camera module and the second camera module at an adjusted exposure frame rate.

That the terminal device controls the third camera module to perform collaborative image shooting with the first camera module and the second camera module at an adjusted exposure frame rate includes: The terminal device controls the third camera module to sense the first signal based on a configured quantity of intervals of sensing the first signal. In response to the sensed first signal, the terminal device controls the third camera module to start to shoot a current frame.

The third camera module may also be used as a slave camera module. In the multi-camera collaborative image shooting scenario, there may be one or more slave camera modules. When there is one slave camera module, there is no third camera module. When there are a plurality of (for example, two or more) slave camera modules, minimum exposure frame rates of the plurality of slave camera modules may be the same or different. In this case, the second camera module may be a target slave camera module with a maximum minimum exposure frame rate in the plurality of slave camera modules, and the third camera module may be a slave camera module other than the target slave camera module in the plurality of slave camera modules.

In this application, the terminal device adjusts the exposure frame rate of the third camera module, so that the second exposure frame rate is the integer multiple of the exposure frame rate of the third camera module. In this way, the third camera module can perform collaborative image shooting with the first camera module and the second camera module at the adjusted exposure frame rate, so as to basically implement synchronous image output. For example, the terminal device may also control the third camera module to sense the first signal based on the configured quantity of intervals of sensing the first signal. In response to the sensed first signal, the terminal device may control the third camera module to start to shoot the current frame.

Optionally, the method further includes: The terminal device configures, for the third camera module based on the second exposure frame rate, the exposure frame rate of the third camera module, and the quantity, configured for the second camera module, of intervals of sensing the first signal, the quantity of intervals of sensing the first signal.

The terminal device configures, for the third camera module, the quantity of intervals of sensing the first signal, so that the third camera module can be controlled to sense the first signal based on the configured quantity of intervals of sensing the first signal.

In some implementations, the quantity, configured for the third camera module, of intervals of sensing the first signal is equal to a sum of the quantity, configured for the second camera module, of intervals of sensing the first signal and a first value, and the first value is a value obtained by subtracting 1 from a quotient of dividing the second exposure frame rate by the exposure frame rate of the third camera module.

For example, the second exposure frame rate is Ss, the exposure frame rate of the third camera module is Sr (where Ss is an integer multiple of Sr), and the quantity of intervals of sensing a pulse signal by the second camera module is (Y-1). The terminal device may determine a value obtained by subtracting 1 from a quotient of dividing Ss by Sr as the first value, and the quantity, configured for the third camera module, of intervals of sensing the first signal may be equal to a sum of the value obtained by subtracting 1 from the quotient of dividing Ss by Sr and (Y-1).

In some implementations, the method further includes: When detecting that scene information of an image shooting scene changes, the terminal device adjusts the exposure frame rate of the first camera module to a fourth exposure frame rate, and adjusts the exposure frame rate of the second camera module to a fifth exposure frame rate. The terminal device controls the first camera module to perform image shooting at the fourth exposure frame rate, and controls the second camera module to perform collaborative image shooting with the first camera module at the fifth exposure frame rate.

That the terminal device controls the first camera module to perform image shooting at the fourth exposure frame rate, and controls the second camera module to perform collaborative image shooting with the first camera module at the fifth exposure frame rate includes: The terminal device controls the first camera module to start to shoot a third frame, and controls the second camera module to start to shoot a fourth frame, where start time of the fourth frame is second duration later than start time of the third frame, and the second duration is related to the fourth exposure frame rate and the fifth exposure frame rate.

For example, in some possible scenarios, scene information of an image shooting environment may change, and the terminal device needs to adjust some or all camera modules based on the change of the scene information, to ensure a better image shooting effect. For example, when brightness of the image shooting environment changes, the terminal device needs to adjust exposure time of some or all camera modules to maintain consistent brightness for image shooting. For example, when the ambient brightness is very low, to ensure that picture brightness is consistent, corresponding long exposure time is usually required. If the exposure time is longer than a frame length of a current frame, the frame length needs to be correspondingly increased. In other words, a frame rate needs to be decreased, which is referred to as frame rate decrease for short. When the ambient brightness changes from a dark scene to normal brightness, an excessively long frame length needs to be restored. In other words, a frame rate needs to be increased, which is referred to as frame rate increase for short. When the ambient brightness changes greatly or sensitivities of components differs greatly, flexibly increasing or decreasing frame rates of camera modules can bring a better image shooting effect, achieve consistent exposure effects between a plurality of cameras and better exposure consistency at different ambient brightness, and improve an image fusion effect.

In this application, after detecting that the scene information of the image shooting scene changes, the terminal device may adjust exposure frame rates of the first camera module and the second camera module. For example, the terminal device adjusts the exposure frame rate of the first camera module to the fourth exposure frame rate, and adjusts the exposure frame rate of the second camera module to the fifth exposure frame rate.

Optionally, the fifth exposure frame rate is different from the second exposure frame rate, and the fourth exposure frame rate may be the same as or different from the first exposure frame rate.

After adjusting the exposure frame rates of the first camera module and the second camera module, the terminal device may control the first camera module to perform image shooting at the fourth exposure frame rate, and control the second camera module to perform collaborative image shooting with the first camera module at the fifth exposure frame rate. Specifically, the terminal device may control the first camera module to start to shoot the third frame, and control the second camera module to start to shoot the fourth frame, where the start time of the fourth frame is the second duration later than the start time of the third frame, and the second duration is related to the fourth exposure frame rate and the fifth exposure frame rate.

For a scenario in which a frame rate is increased or decreased after the scene information of the image shooting scene changes, the method may still ensure that post-exposure image output of the second camera module is synchronized with post-exposure image output of the first camera module at a frame trailer. This ensures picture consistency of images shot by the first camera module and the second camera module in the frame rate increase/decrease scenario, so as to improve an image generation effect of a final shot image.

Optionally, after detecting that the scene information of the image shooting scene changes, the terminal device may further adjust the exposure frame rate of the third camera module. The exposure frame rate of the third camera module is related to the exposure frame rate of the second camera module. For an adjustment manner, refer to the foregoing implementations. Details are not described again.

In some implementations, that the second duration is related to the fourth exposure frame rate and the fifth exposure frame rate includes: The second duration is equal to a difference between a frame length corresponding to a sixth exposure frame rate and a frame length corresponding to the fifth exposure frame rate. The sixth exposure frame rate is a largest value in all values that are less than or equal to the fifth exposure frame rate and that can exactly divide the fourth exposure frame rate.

The second duration is similar to the first duration. For example, the fourth exposure frame rate (which may be referred to as an expected exposure frame rate of the first camera module) is Sm_new, and the fifth exposure frame rate (which may be referred to as an expected exposure frame rate of the second camera module) is Ss_new. The sixth exposure frame rate may be a first frame rate Ss1_new that is determined by decreasing a frame rate based on Ss_new with a reference of Sm_new and that can exactly divide Sm_new. In other words, Ss1_new is a largest value in all values that are less than or equal to Ss_new and that can exactly divide Sm_new. The second duration may be a difference (which may be an absolute value of the difference) between a frame length corresponding to Ss1_new and a frame length corresponding to Ss_new.

Optionally, the method further includes: The terminal device controls the first camera module to send the first signal after a delay of the second duration from the start time of the third frame. That the terminal device controls the second camera module to start to shoot a fourth frame includes: The terminal device controls the second camera module to sense the first signal based on the configured quantity of intervals of sensing the first signal. In response to the sensed first signal, the terminal device controls the second camera module to start to shoot the fourth frame.

That the terminal device controls the first camera module to send the first signal after a delay of the second duration from the start time of the third frame means that the terminal device may control time at which the first camera module sends the first signal to be delayed by the second duration from the start time of the third frame. The terminal device controls the second camera module to sense the first signal based on the configured quantity of intervals of sensing the first signal; and the terminal device controls, in response to the sensed first signal, the second camera module to start to shoot the fourth frame. In this way, time for starting to shoot the fourth frame is the second duration later than the third frame, so that time for starting post-exposure image output by the second camera module is controlled based on the exposure frame rate of the first camera module and the exposure frame rate of the second camera module.

Optionally, the method further includes: The terminal device configures, for the first camera module based on the fourth exposure frame rate and the fifth exposure frame rate, time at which the first signal is sent to be delayed by the second duration from the start time of the third frame.

As described above, for example, the fourth exposure frame rate is Sm_new, and the fifth exposure frame rate is Ss_new. The second duration may be equal to the difference between the frame length corresponding to Ss1_new and the frame length corresponding to Ss_new. The terminal device may configure, for the first camera module, the time at which the first signal is sent to be delayed by the second duration from the start time of the third frame, so as to control the first camera module to send the first signal after the delay of the second duration from the start time of the third frame.

Optionally, the fourth exposure frame rate is less than or equal to Z times the fifth exposure frame rate, or Z times a frame length corresponding to the fourth exposure frame rate is greater than or equal to the frame length corresponding to the fifth exposure frame rate, where Z is equal to a value obtained by adding 1 to the quantity, configured for the second camera module, of intervals of sensing the first signal.

Because the quantity of intervals of sensing the first signal by the second camera module is determined in a streaming initiation stage, based on a constraint of hard synchronization, the fourth exposure frame rate and the fifth exposure frame rate satisfy the following condition: The fourth exposure frame rate is less than or equal to Z times the fifth exposure frame rate, or Z times the frame length corresponding to the fourth exposure frame rate is greater than or equal to the frame length corresponding to the fifth exposure frame rate. When the fourth exposure frame rate and the fifth exposure frame rate meet the foregoing relationship, an expected frame rate combination may always be implemented between the fourth exposure frame rate and the fifth exposure frame rate.

In some implementations, the method further includes: The terminal device performs fusion processing on the first frame and the second frame to obtain a first image.

The first image is a final shot image obtained in the multi-camera collaborative image shooting scenario, and may have a good image generation effect.

In some implementations, that a terminal device determines a first camera module and a second camera module from configured camera modules may include: The terminal device obtains scene information of a current image shooting scene and capability information of the configured camera modules; and the terminal device determines the first camera module and the second camera module from the configured camera modules based on the scene information and the capability information.

For example, the terminal device may obtain the scene information of the current image shooting scene when enabling an image shooting function (for example, starting an image shooting application). For example, the scene information includes one or more of the following: focal length information, light information, and an image shooting requirement of a user.

That the terminal device obtains scene information of a current image shooting scene may include: The terminal device obtains the scene information of the current image shooting scene based on one or more of a preview picture corresponding to the current image shooting scene, sensor information (for example, light information collected by a light sensor), and a first operation. The first operation is an operation of selecting an image shooting mode and/or setting an image shooting parameter on a first interface displayed by the terminal device.

Alternatively, the terminal device may identify a preview picture corresponding to the current image shooting scene, to obtain the scene information corresponding to the current image shooting scene. For example, the terminal device may determine, by identifying the preview picture corresponding to the current image shooting scene, whether an image shooting requirement of a user is a portrait or a scene, or determine light information of the current image shooting scene. Alternatively, the terminal device may further comprehensively determine the scene information of the current image shooting scene with reference to an identification result of a preview picture corresponding to the current image shooting scene, a detection parameter of hardware like a light sensor, an operation of a user, and the like.

Optionally, the capability information of the camera module includes one or more of the following: a maximum exposure frame rate, an appropriate image shooting focal length, and an image output color mode.

In some implementations, the first exposure frame rate and the second exposure frame rate may be separately determined based on a minimum exposure frame rate of the first camera module and a minimum exposure frame rate of the second camera module after the terminal device determines the minimum exposure frame rate of the first camera module and the minimum exposure frame rate of the second camera module based on the scene information of the current image shooting scene and the capability information of the camera modules configured by the terminal device. For example, the first exposure frame rate is greater than or equal to the minimum exposure frame rate of the first camera module. The second exposure frame rate is greater than or equal to the minimum exposure frame rate of the second camera module.

According to a second aspect, an embodiment of this application provides an image shooting apparatus. The apparatus may be used in a terminal device, and is configured to implement the image shooting method according to the first aspect. A function of the apparatus may be implemented by hardware, or may be implemented by executing corresponding software by hardware. The hardware or the software includes one or more modules or units corresponding to the foregoing function. For example, the apparatus may include a configuration module, an image shooting module, and the like.

The configuration module is configured to: determine a first camera module and a second camera module from configured camera modules; adjust an exposure frame rate of the first camera module to a first exposure frame rate; and adjust an exposure frame rate of the second camera module to a second exposure frame rate, where the first exposure frame rate is different from the second exposure frame rate.

The image shooting module is configured to: control the first camera module to perform image shooting at the first exposure frame rate, and control the second camera module to perform collaborative image shooting with the first camera module at the second exposure frame rate.

The image shooting module is specifically configured to: control the first camera module to start to shoot a first frame; and control the second camera module to start to shoot a second frame, where start time of the second frame is first duration later than start time of the first frame, and the first duration is related to the first exposure frame rate and the second exposure frame rate.

In some implementations, that the first duration is related to the first exposure frame rate and the second exposure frame rate includes: The first duration is equal to a difference between a frame length corresponding to a third exposure frame rate and a frame length corresponding to the second exposure frame rate. The third exposure frame rate is a largest value in all values that are less than or equal to the second exposure frame rate and that can exactly divide the first exposure frame rate.

Optionally, the image shooting module is further configured to: control the first camera module to send the first signal after a delay of the first duration from the start time of the first frame; and control the second camera module to sense the first signal based on a configured quantity of intervals of sensing the first signal, and control, in response to the sensed first signal, the second camera module to start to shoot the second frame.

Optionally, the configuration module is further configured to: configure, for the second camera module based on the first exposure frame rate and the second exposure frame rate, the quantity of intervals of sensing the first signal, and configure, for the first camera module based on the first exposure frame rate and the second exposure frame rate, time at which the first signal is sent to be delayed by the first duration from the start time of the first frame.

In some implementations, the quantity, configured for the second camera module, of intervals of sensing the first signal is equal to a value obtained by subtracting 1 from a quotient of dividing the first exposure frame rate by the third exposure frame rate.

In some implementations, the configuration module is further configured to: determine a third camera module from the configured camera modules, and adjust an exposure frame rate of the third camera module, so that the exposure frame rate of the third camera module meets: the second exposure frame rate is an integer multiple of the exposure frame rate of the third camera module. The image shooting module is further configured to: control the third camera module to perform collaborative image shooting with the first camera module and the second camera module at an adjusted exposure frame rate.

The image shooting module is specifically configured to: control the third camera module to sense the first signal based on a configured quantity of intervals of sensing the first signal; and in response to the sensed first signal, control the third camera module to start to shoot a current frame.

Optionally, the configuration module is further configured to: configure, for the third camera module based on the second exposure frame rate, the exposure frame rate of the third camera module, and the quantity, configured for the second camera module, of intervals of sensing the first signal, the quantity of intervals of sensing the first signal.

In some implementations, the quantity, configured for the third camera module, of intervals of sensing the first signal is equal to a sum of the quantity, configured for the second camera module, of intervals of sensing the first signal and a first value, and the first value is a value obtained by subtracting 1 from a quotient of dividing the second exposure frame rate by the exposure frame rate of the third camera module.

In some implementations, the configuration module is further configured to: when detecting that scene information of an image shooting scene changes, adjust the exposure frame rate of the first camera module to a fourth exposure frame rate, and adjust the exposure frame rate of the second camera module to a fifth exposure frame rate. The image shooting module is further configured to: control the first camera module to perform image shooting at the fourth exposure frame rate; and control the second camera module to perform collaborative image shooting with the first camera module at the fifth exposure frame rate.

The image shooting module is specifically configured to: control the first camera module to start to shoot a third frame; and control the second camera module to start to shoot a fourth frame, where start time of the fourth frame is second duration later than start time of the third frame, and the second duration is related to the fourth exposure frame rate and the fifth exposure frame rate.

In some implementations, that the second duration is related to the fourth exposure frame rate and the fifth exposure frame rate includes: The second duration is equal to a difference between a frame length corresponding to a sixth exposure frame rate and a frame length corresponding to the fifth exposure frame rate. The sixth exposure frame rate is a largest value in all values that are less than or equal to the fifth exposure frame rate and that can exactly divide the fourth exposure frame rate.

Optionally, the image shooting module is further configured to: control the first camera module to send the first signal after a delay of the second duration from the start time of the third frame; and control the second camera module to sense the first signal based on the configured quantity of intervals of sensing the first signal, and in response to the sensed first signal, control the second camera module to start to shoot the fourth frame.

Optionally, the configuration module is further configured to: configure, for the first camera module based on the fourth exposure frame rate and the fifth exposure frame rate, time at which the first signal is sent to be delayed by the second duration from the start time of the third frame.

Optionally, the fourth exposure frame rate is less than or equal to Z times the fifth exposure frame rate, or Z times a frame length corresponding to the fourth exposure frame rate is greater than or equal to the frame length corresponding to the fifth exposure frame rate, where Z is equal to a value obtained by adding 1 to the quantity, configured for the second camera module, of intervals of sensing the first signal.

In some implementations, the image shooting module is further configured to: perform fusion processing on the first frame and the second frame to obtain a first image.

It should be understood that the image shooting apparatus may be configured to implement all functions of the image shooting method in the first aspect. Details are not described again.

According to a third aspect, an embodiment of this application provides an electronic device. The electronic device includes a processor and a memory configured to store executable instructions of the processor. When the processor is configured to execute the instructions, the electronic device is enabled to implement the method according to the first aspect and any one of the possible implementations of the first aspect.

According to a fourth aspect, an embodiment of this application provides a computer-readable storage medium. The computer-readable storage medium stores computer program instructions, and when the computer program instructions are executed by an electronic device, the electronic device is enabled to implement the method according to the first aspect and any one of the possible implementations of the first aspect.

According to a fifth aspect, an embodiment of this application further provides a computer program product, including computer-readable code. When the computer-readable code is run in an electronic device, the electronic device is enabled to implement the method according to the first aspect and any one of the possible implementations of the first aspect.

In the third aspect to the fifth aspect, the electronic device may be the terminal device in the first aspect.

For beneficial effects of the second aspect to the fifth aspect, refer to the descriptions in the first aspect. Details are not described herein again.

It should be understood that, descriptions of technical features, technical solutions, beneficial effects, or similar words in this application do not imply that all features and advantages can be implemented in any individual embodiment. On the contrary, it may be understood that, the descriptions of the features or the beneficial effects mean that at least one embodiment includes a specific technical feature, technical solution, or beneficial effect. Therefore, the descriptions of the technical features, the technical solutions, or the beneficial effects in this specification may not necessarily be specific to a same embodiment. Further, the technical features, the technical solutions, and the beneficial effects described in embodiments may be combined in any appropriate manner. A person skilled in the art may understand that an embodiment may be implemented without one or more specific technical features, technical solutions, or beneficial effects in a specific embodiment. In other embodiments, additional technical features and beneficial effects may be identified in a specific embodiment that does not reflect all embodiments.

### BRIEF DESCRIPTION OF DRAWINGS

FIG. 1 is a schematic diagram of a hard synchronization control principle of two camera modules;
FIG. 2 is a schematic diagram of a structure of a terminal device according to an embodiment of this application;
FIG. 3 is a schematic flowchart of an image shooting method according to an embodiment of this application;
FIG. 4 is a schematic diagram of a hard synchronization control principle in a scenario in which a slave camera module includes only a target slave camera module according to an embodiment of this application;
FIG. 5 is a schematic diagram of a hard synchronization control principle in a scenario in which a slave camera module includes a target slave camera module and another slave camera module according to an embodiment of this application;
FIG. 6 is another schematic flowchart of an image shooting method according to an embodiment of this application;
FIG. 7 is a schematic diagram of a frame rate decrease principle in a scenario in which a slave camera module includes only a target slave camera module according to an embodiment of this application;
FIG. 8 is a schematic diagram of an implementation principle of a software architecture of a terminal device according to an embodiment of this application; and
FIG. 9 is a schematic diagram of a structure of an image shooting apparatus according to an embodiment of this application.

### DESCRIPTION OF EMBODIMENTS

Terms used in the following embodiments are merely intended to describe specific embodiments, but are not intended to limit this application. The terms "one", "a", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in other ways. The term "connection" includes a direct connection and an indirect connection, unless otherwise indicated.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

In a multi-camera collaborative image shooting scenario, a terminal device (for example, a mobile phone) may be provided with a plurality of (two or more) camera (camera) modules, and a camera module is also referred to as a camera module. When performing image shooting, the terminal device may simultaneously perform image shooting by using a plurality of camera modules, to obtain a plurality of images that are in a one-to-one correspondence with the plurality of camera modules. The terminal device may perform fusion processing on the plurality of images to obtain a final shot image. The final shot image may have a better image shooting effect (or referred to as an image generation effect).

For example, in a possible scenario, the terminal device may include a color camera and a depth of field camera. When performing image shooting, the terminal device may obtain a color image by image shooting by using the color camera, and obtain a black-and-white image by image shooting by using the depth of field camera. The terminal device may perform fusion processing on the color image shot by the color camera and the black-and-white image shot by the depth of field camera, to obtain a final shot image. The final shot image may include richer depth of field information, and an image generation effect may be better.

Currently, when the terminal device performs image shooting by using the plurality of camera modules, the terminal device may control, by using a hard synchronization control technology, timestamps at which the plurality of camera modules start to expose a picture of each frame of image in an image shooting phase to be consistent, to ensure picture consistency of images shot by the plurality of camera modules, so as to improve an image generation effect of a fused image (namely, a final shot image).

For example, a main principle of a currently common hard synchronization control technology is as follows: When a terminal device performs image shooting by using a plurality of camera modules, the terminal device divides the plurality of camera modules into one master (master) camera module and another slave (slave) camera module, and controls the master camera module and the slave camera module to maintain a same exposure frame rate (that is, an exposure frame rate of the slave camera module follows an exposure frame rate of the master camera module, and quantities of exposed frames of the master camera module and the slave camera module are the same in same image shooting preview time). The master camera module sends an XVS pulse signal at a moment corresponding to a frame header of each frame of image in an image shooting phase, and the another slave camera module senses the XVS pulse signal sent by the master camera module. The another slave camera module starts post-exposure image output of the current frame each time when sensing the XVS pulse signal sent by the master camera module. After completing the post-exposure image output of the current frame, the another slave camera module waits for the XVS pulse signal sent by the master camera module next time, and starts post-exposure image output of a next frame until sensing the XVS pulse signal sent by the master camera module next time. Therefore, timestamps at which pictures of each frame of image starts to be exposed in the image shooting phase of the plurality of camera modules may be consistent.

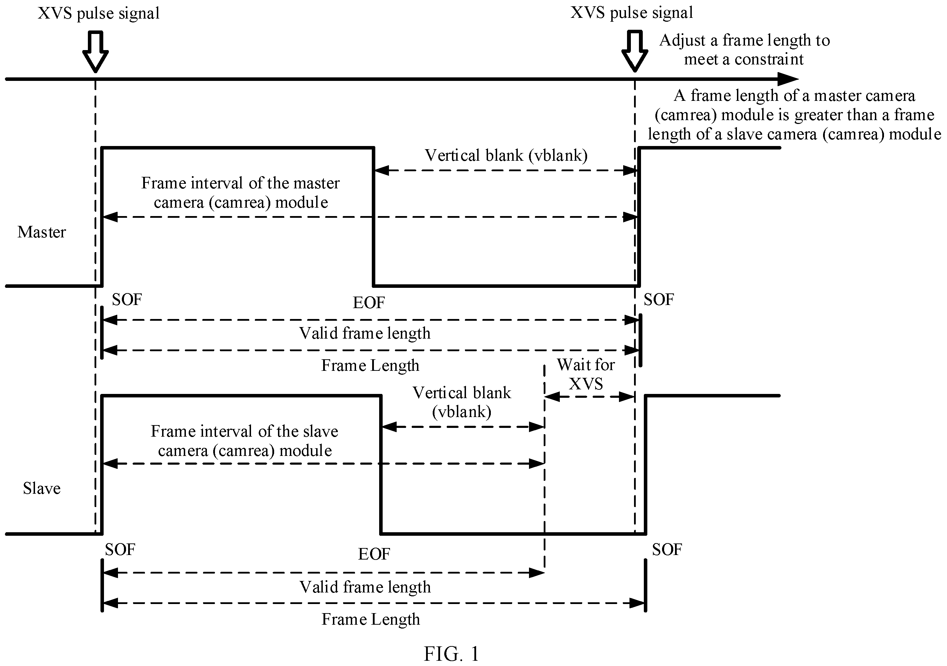

For example, a scenario in which the terminal device implements multi-camera collaborative image shooting by using two camera modules is used as an example. FIG. 1 is a schematic diagram of a hard synchronization control principle of the two camera modules. In the two camera modules, one camera module is used as a master camera module, and the other camera module is used as a slave camera module.

As shown in FIG. 1, the master camera module and the slave camera module may maintain a same exposure frame rate. The master camera module sends an XVS pulse signal at a moment corresponding to a frame header of each frame of image in an image shooting phase. The frame header may be represented by a start-of-frame delimiter (start-of-frame delimiter, SOF), and a frame trailer may be represented by an end-of-frame delimiter (end-of-frame delimiter, EOF). The slave camera module may start post-exposure image output of a current frame when sensing the XVS pulse signal. A valid frame length of the master camera module is slightly greater than a valid frame length of the slave camera module. For example, a frame length of a camera module generally indicates a length between an SOF and a next SOF, and a valid frame length indicates a sum of a length from an SOF to an EOF and a vertical blank (vertical blank, vblank, also referred to as blank invalid line time, or vertical blank, or field blank) in each frame. The terminal device may adjust lengths of vblank of the master camera module and vblank of the slave camera module, so that the valid frame length of the master camera module is slightly greater than the valid frame length of the slave camera module. Here, vblank indicates time from the end of reading a last line of a previous frame to the start of reading a first line of a next frame. After post-exposure image output of the current frame ends, the slave camera module waits for the XVS pulse signal sent by a master camera. When the slave camera module senses the XVS pulse signal sent by the master camera module next time, the slave camera module starts post-exposure image output of a next frame. In this manner, it can be ensured that timestamps of a frame header of each frame of the master camera module and a frame header of each frame of the slave camera module are consistent, and an image generation effect at same time at a millisecond level is achieved.

However, in the foregoing current hard synchronization control technology, the master camera module and the slave camera module maintain a same exposure frame rate, which causes high power consumption of the terminal device.

For example, in the multi-camera collaborative image shooting scenario, when the terminal device performs multi-image fusion, an output image of the master camera module generally needs to be used as a reference, and the master camera module sets a high exposure frame rate (namely, a larger quantity of exposed frames in a unit time) to ensure high dynamicity of an image shooting effect. The slave camera module keeps the same high exposure frame rate as the master camera module. When the master camera module and the slave camera module maintain a same high exposure frame rate, camera power consumption of the terminal device is high. For example, the terminal device heats up or even overheats. When the terminal device reaches a specific upper temperature limit, the camera module of the terminal device may not maintain a high-performance working mode. This affects a final image shooting effect.

In this background, an embodiment of this application provides an image shooting method, which is applicable to a scenario in which a terminal device configured with a plurality of (for example, at least two) camera modules performs multi-camera collaborative image shooting. In the method, the terminal device may first determine, from the configured camera modules, a master camera module and a slave camera module that need to be used for image shooting, and configure different exposure frame rates for the master camera module and the slave camera module. Then, the terminal device may control the master camera module and the slave camera module to perform image shooting at the different exposure frame rates. In an image shooting process, the terminal device may control, based on an exposure frame rate of the master camera module and an exposure frame rate of the slave camera module, time at which the slave camera module starts post-exposure image output, so that post-exposure image output of the slave camera module may be synchronized with post-exposure image output of the master camera module at a frame trailer.

In the method, the master camera module and the slave camera module perform image shooting at the different exposure frame rates. This can minimize power consumption generated by the slave camera module at an unnecessarily high frame rate, and effectively reduces power consumption of the terminal device in a multi-camera collaborative image shooting scenario. The post-exposure image output of the slave camera module is synchronized with the post-exposure image output of the master camera module at the frame trailer. This can ensure picture consistency of images shot by the master camera module and the slave camera module, so as to improve an image generation effect of a final shot image. In other words, the method can reduce power consumption of the terminal device to a maximum extent while ensuring image shooting effects of the plurality of camera modules.

Optionally, in embodiments of this application, the terminal device may be a mobile terminal with an image shooting function, for example, a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA), or may be a professional image shooting device like a digital camera, a single-lens reflex camera/micro-single camera, a motion camera, a pan-tilt-zoom camera, or an unmanned aerial vehicle. A specific type of the terminal device is not limited in embodiments of this application.

It should be understood that the terminal device has at least two camera modules, configured to implement multi-camera collaborative image shooting.

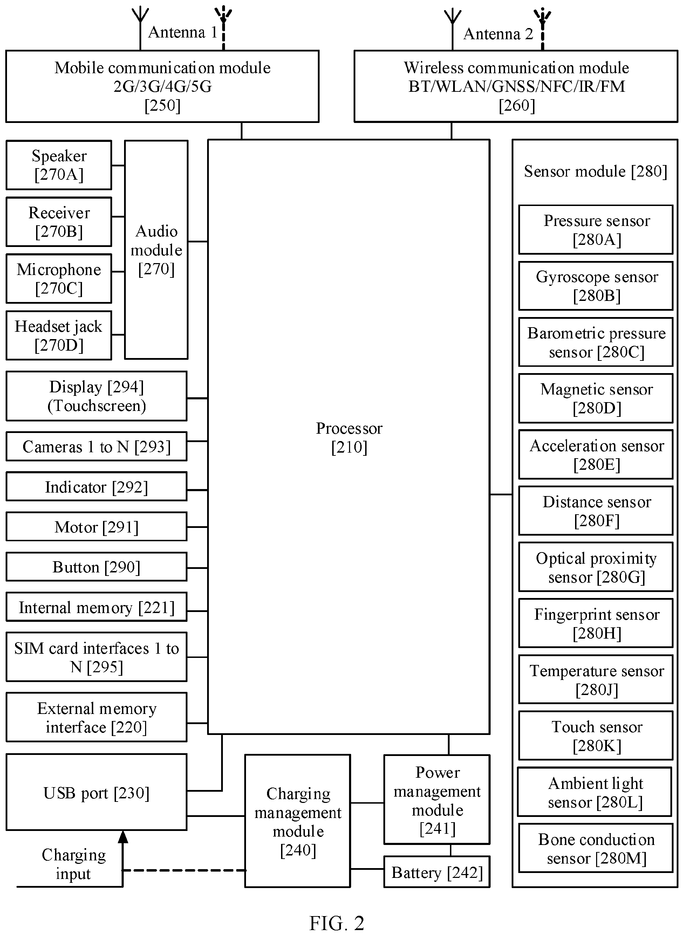

For example, the terminal device is a mobile phone. FIG. 2 is a schematic diagram of a structure of the terminal device according to an embodiment of this application. As shown in FIG. 2, the mobile phone may include a processor 210, an external memory interface 220, an internal memory 221, a universal serial bus (universal serial bus, USB) port 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone. The controller may generate an operation control signal based on an instruction operation code and a time sequence signal, to complete control of instruction reading and instruction execution.

A memory may be further disposed in the processor 210, and is configured to store instructions and data. In some embodiments, the memory in the processor 210 is a cache memory. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB port, and/or the like.

The external memory interface 220 may be configured to connect to an external storage card such as a micro SD card, to extend a storage capability of the mobile phone. The external storage card communicates with the processor 210 through the external memory interface 220, to implement a data storage function. For example, a picture that is shot in a multi-camera collaborative image shooting scenario or another file like a picture, music, or a video may be stored in an external memory card.

The internal memory 221 may be configured to store computer-executable program code. The executable program code includes instructions. The processor 210 runs the instructions stored in the internal memory 221, to perform various function applications of the mobile phone and data processing. For example, the internal memory 221 may store the computer-executable program code for implementing the image shooting method provided in embodiments of this application. The processor 210 may implement the image shooting method provided in embodiments of this application by running instructions of the computer executable program code.

The internal memory 221 may further include a program storage region and a data storage region. The program storage region may store an operating system, an application (for example, a camera application) required by at least one function, and the like. The data storage region may store data (for example, image data and an address book) created during use of the mobile phone, and the like. In addition, the internal memory 221 may include a high-speed random access memory, or may include a non-volatile memory, for example, at least one magnetic disk storage device, a flash memory device, or a universal flash storage (universal flash storage, UFS).

The charging management module 240 is configured to receive a charging input from the charger. The charging management module 240 supplies power to the mobile phone through the power management module 241 while charging the battery 242. The power management module 241 is configured to connect to the battery 242, the charging management module 240, and the processor 210. The power management module 241 may also receive an input of the battery 242 to supply power to the mobile phone.

A wireless communication function of the mobile phone may be implemented by using the antenna 1, the antenna 2, the mobile communication module 250, the wireless communication module 260, the modem processor, the baseband processor, and the like. The antenna 1 and the antenna 2 are configured to transmit and receive an electromagnetic wave signal. Each antenna in the mobile phone may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile phone may implement an audio function such as music playing or recording through the audio module 270, the speaker 270A, the receiver 270B, the microphone 270C, the headset jack 270D, the application processor, and the like.

The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like. When the mobile phone performs image shooting, the mobile phone may collect scene information of a current image shooting scene by using the sensor module 280. For example, the mobile phone collects a temperature of the current image shooting scene by using the temperature sensor 280J, and collects light of the current image shooting scene by using the ambient light sensor 280L.

The mobile phone may perform image shooting by using the camera 293. The camera 293 may also be referred to as a camera module. In embodiments of this application, there are at least two cameras 293, and types of different cameras may be different. For example, the camera 293 may be a color camera module, a black-and-white camera module, a depth of field camera module, a long-focus (or long-focus) camera module, a wide-angle camera module, a micro camera module, or the like. A quantity of cameras 293 and a specific type of each camera 293 are not limited in this application.

For example, the camera 293 may include a lens (lens) and a sensor (sensor). When a photo or a video is taken, a shutter is enabled, and light may be transferred to the sensor by using the lens of the camera 293. The sensor may convert an optical signal that passes through the lens into an electrical signal, and then perform A/D conversion on the electrical signal to output a corresponding digital signal. After subsequent RAW domain processing, ISP processing, YUV domain processing, and the like are performed on the digital signal, a shot photo or video picture may be obtained.

In a possible design, a photosensitive element of the sensor may be a charge coupled device (charge coupled device, CCD), and the sensor further includes an A/D converter. In another possible design, the photosensitive element of the sensor may be a complementary metal oxide semiconductor (complementary metal-oxide-semiconductor, CMOS).

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone may include one or N displays 294, where N is a positive integer greater than 1. For example, the display 294 may be configured to display an application interface, and the application interface may be a camera interface.

The mobile phone implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs, which execute program instructions to generate or change display information.

It may be understood that the structure shown in FIG. 2 does not constitute a specific limitation on the mobile phone. In some embodiments, for example, the mobile phone may also include more or fewer components than those shown in the FIG. 2, or some components may be combined, or some components may be split, or there may be a different component layout. Alternatively, some components shown in FIG. 2 may be implemented by hardware, software, or a combination of software and hardware.

In addition, when the terminal device is another mobile terminal with an image shooting function, for example, a tablet computer, a wearable device, a vehicle-mounted device, an AR/VR device, a notebook computer, a UMPC, a netbook, or a PDA, or is a professional image shooting device like a digital camera, a single-lens reflex camera/micro single-camera, a motion camera, a pan-tilt-zoom camera, or an unmanned aerial vehicle. For a specific structure of these other terminal devices, refer to FIG. 2. For example, components may be added to or removed from another terminal device based on the structure shown in FIG. 2. Details are not described herein again.

It should be further understood that one or more image shooting applications may be run in the terminal device (for example, a mobile phone), so that an image shooting function is implemented by running the image shooting application. For example, the image shooting application may include a system-level application, namely, a "camera" application. For another example, the image shooting application may further include another application that is installed in the terminal device and that can be used for image shooting. A specific type of the image shooting application is not limited herein either.

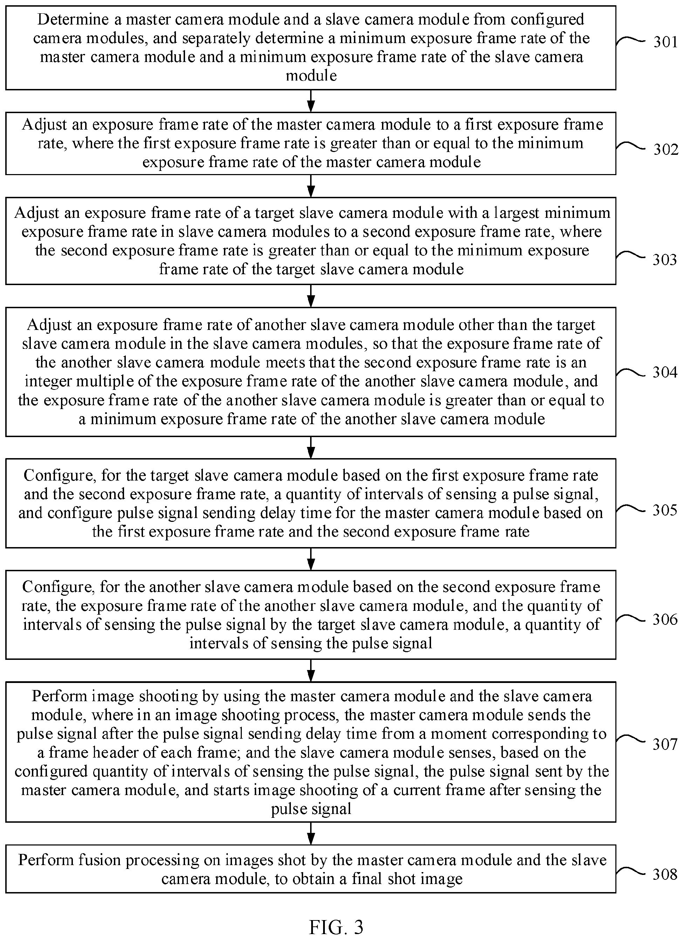

With reference to a procedure shown in FIG. 3, the following describes an example of the image shooting method provided in embodiments of this application.

For example, FIG. 3 is a schematic flowchart of an image shooting method according to an embodiment of this application. The image shooting method may be applied to a terminal device. As shown in FIG. 3, the method may include the following steps.

301: Determine a master camera module and a slave camera module from configured camera modules, and separately determine a minimum exposure frame rate of the master camera module and a minimum exposure frame rate of the slave camera module.

For example, when enabling an image shooting function, the terminal device may obtain scene information corresponding to a current image shooting scene, then determine the master camera module and the slave camera module (that is, determine the master camera module and the slave camera module that are suitable for shooting the current image shooting scene) from the configured camera modules based on the scene information and capability information of the configured camera modules, and separately determine the minimum exposure frame rate of the master camera module and the minimum exposure frame rate of the slave camera module.

Optionally, the scene information may include focal length information of the current image shooting scene, light information of the current image shooting scene, an image shooting requirement of a user, and the like.

The focal length information of the current image shooting scene may be a focal length (namely, an image shooting distance) between the terminal device and a shot object in the current image shooting scene. The focal length may determine a distance at which a shot image is clear. A larger focal length indicates a smaller depth of field and a smaller image shooting angle.

The light information of the current image shooting scene may indicate a light brightness degree in the current image shooting scene, whether light has a dynamic brightness change (in a multi-light source scene), or the like. Optionally, the light information of the current image shooting scene may be obtained based on sensor information collected by a sensor configured in the terminal device. For example, the light information may be collected by an ambient light sensor (a light sensor).

The image shooting requirement of the user indicates an image shooting mode, an image shooting parameter, and the like that are selected or set by the user on the terminal device.

For example, the terminal device may include an image shooting application, and the terminal device may start and run the image shooting application in response to an operation of starting the image shooting application by the user. After the image shooting application is started and run, the terminal device starts the image shooting function. The terminal device may invoke the configured camera modules by using the image shooting application to implement the image shooting function. After starting and running the image shooting application, the terminal device may display an image shooting interface by using the image shooting application. The image shooting interface may include function controls respectively corresponding to a plurality of image shooting modes that can be selected by the user. For example, the image shooting modes may include a wide aperture mode, a portrait mode, a blurring mode, a slow-mo mode, a high dynamic mode, a night mode, and the like. The user may select one or more image shooting modes by tapping a corresponding function control on the image shooting interface. The terminal device may determine an image shooting requirement of the user in response to an operation of selecting the image shooting mode by the user. For example, the user may tap a function control corresponding to the portrait mode, and the terminal device may determine that the image shooting requirement of the user includes: portrait shooting or a portrait mode.

After the terminal device starts and runs the image shooting application, the image shooting interface displayed by using the image shooting application is also referred to as a first interface. An operation of selecting the image shooting mode and/or setting an image shooting parameter by the user on the image shooting interface may also be referred to as a first operation.

In some embodiments, the terminal device may identify a preview picture corresponding to the current image shooting scene, to obtain the scene information corresponding to the current image shooting scene. For example, the terminal device may determine, by identifying the preview picture corresponding to the current image shooting scene, whether the image shooting requirement of the user is a portrait or a scene, or determine the light information of the current image shooting scene.

Alternatively, the terminal device may further comprehensively determine the scene information of the current image shooting scene with reference to an identification result of the preview picture corresponding to the current image shooting scene, a detection parameter of hardware like the light sensor, an operation of the user, and the like.

It should be noted that the foregoing mentioned scene information corresponding to the current image shooting scene is merely an example for description. In embodiments of this application, neither a specific type of the scene information that corresponds to the current image shooting scene and that is obtained by the terminal device, nor a specific manner in which the terminal device obtains the scene information of the current image shooting scene is limited.

After obtaining the scene information corresponding to the current image shooting scene, the terminal device may determine the master camera module and the slave camera module from the configured camera modules based on the scene information and the capability information of the configured camera modules. There may be one or more slave camera modules. The minimum exposure frame rate of the master camera module is greater than a minimum exposure frame rate of any slave camera module.

It should be understood that the master camera module and the slave camera module determined by the terminal device form a camera module combination (or referred to as a multi-camera collaborative combination) suitable for shooting the current image shooting scene, and can be used to perform collaborative image shooting on the current image shooting scene.

In some embodiments, the capability information of the camera module configured by the terminal device may be preset in the terminal device. For example, each camera module may store respective capability information, and the terminal device may obtain the capability information of each camera module.

For example, the capability information of the camera module may include a maximum exposure frame rate, an appropriate image shooting focal length, an image output color mode, and the like.

For example, it is assumed that the camera module configured by the terminal device includes a color camera module, a black-and-white camera module, a depth of field camera module, a long-focus camera module, and a wide-angle camera module. Capability information of the foregoing camera modules may be as follows:

(1) A maximum exposure frame rate of the color camera module is 30 frames per second (frames per second, FPS) or 60 FPS. An appropriate image shooting focal length is between 0.8X and 5X. An image output color mode is color.

(2) A maximum exposure frame rate of the black-and-white camera module is 30 FPS. An appropriate image shooting focal length is between 0.8X and 5X. An image output color mode is no color or black and white.

(3) A maximum exposure frame rate of the depth of field camera module is 30 FPS. An appropriate image shooting focal length is between 0.8X and 5X. An image output color mode is color. The depth of field information with better precision can be obtained quickly and at a long distance (1 meter to 10 meters).

(4) A maximum exposure frame rate of the long-focus camera module is 30 FPS. An appropriate image shooting focal length is above 3X. An image output color mode is color.

(5) A maximum exposure frame rate of the wide-angle camera module is 30 FPS. An appropriate image shooting focal length is between 0.1X and 1X. An image output color mode is color.

It is assumed that the scene information that corresponds to the current image shooting scene and that is collected by the terminal device in step 301 is a wide aperture and portrait mode and a focal length between 1X and 3X. In this case, the terminal device may determine, based on a focal length scene of 1X to 3X, that the long-focus camera module and the wide-angle camera module are not required with reference to the capability information of the color camera module, the black-and-white camera module, the depth of field camera module, the long-focus camera module, and the wide-angle camera module. In a wide aperture mode, the color camera module is selected as a master camera module to provide primary image information, and the black-and-white camera module is selected as a slave camera module to provide richer light and brightness information; and the depth of field camera module is selected as a slave camera module in a portrait mode to provide a better blurring effect. In other words, in this scene, the terminal device may select the color camera module as the master camera module, and the black-and-white camera module and the depth of field camera module as the slave camera modules.

It is assumed that the scene information that corresponds to the current image shooting scene and that is collected by the terminal device in step 301 is a wide aperture and non-portrait mode and a focal length between 1X and 3X. In this case, the terminal device may determine, based on a focal length scene of 1X to 3X, that the long-focus camera module and the wide-angle camera module are not required with reference to the capability information of the color camera module, the black-and-white camera module, the depth of field camera module, the long-focus camera module, and the wide-angle camera module. In a wide aperture mode, the color camera module is selected as a master camera module to provide primary image information, and the black-and-white camera module is selected as a slave camera module to provide richer light and brightness information; and it is determined, in a non-portrait mode, that the depth of field camera module is not required. In other words, in this scene, the terminal device may select the color camera module as the master camera module, and the black-and-white camera module as the slave camera module.

The foregoing example describes a case in which the long-focus camera module and the wide-angle camera module are not required when the focal length is between 1X and 3X. The following describes a case in which the long-focus camera module or the wide-angle camera module is required.

Optionally, when the focal length is between 0.5X and 1X, the terminal device may determine, based on a specific change of the focal length, whether the wide-angle camera module is required, and when the wide-angle camera module is required, determine a master/slave camera module in the wide-angle camera module and the color camera module.

For example, in a process of transitioning the focal length from 1X to 0.5X, a manner in which the terminal device determines the master/slave camera module based on the specific change of the focal length may be as follows:
(1) When the focal length is less than 1X and greater than 0.9X, the terminal device may select the color camera module as the master camera module, and determine that the wide-angle camera module is not required.
(2) When the focal length is less than or equal to 0.9X and greater than 0.7X, the terminal device may select the color camera module as the master camera module, and select the wide-angle camera module as the slave camera module.
(3) When the focal length is less than or equal to 0.7X and greater than 0.5X, the terminal device may select the color camera module as the slave camera module, and select the wide-angle camera module as the master camera module.
(4) When the focal length is less than or equal to 0.5X, the terminal device may select the wide-angle camera module as the master camera module, and determine that the color camera module is not required.

Similarly, when the focal length is between 3X and 5X, the terminal device may determine, based on the specific change of the focal length, whether the long-focus camera module is required, and when the long-focus camera module is required, determine a master/slave camera module in the long-focus camera module and the color camera module.

For example, in a process of transitioning the focal length from 3X to 5X, a manner in which the terminal device determines the master/slave camera module based on the specific change of the focal length may be as follows:
(1) When the focal length is greater than 3X and less than 3.5X, the terminal device may select the color camera module as the master camera module, and select the long-focus camera module as the slave camera module.
(2) When the focal length is greater than or equal to 3.5X and less than 5X, the terminal device may select the color camera module as the slave camera module, and select the long-focus camera module as the master camera module.
(3) When the focal length is greater than or equal to 5X, the terminal device may select the long-focus camera module as the master camera module, and determine that the color camera module is not required.

It should be noted that the foregoing process in which the terminal device determines, from the camera modules configured by the terminal device and based on the scene information corresponding to the current image shooting scene and the capability information of the camera modules configured by the terminal device, the master camera module and the slave camera module that are suitable for shooting the current image shooting scene is merely an example for description. It should be understood that, when the scene information corresponding to the current image shooting scene is of another type, a manner in which the terminal device determines the master camera module and the slave camera module that are suitable for shooting the current image shooting scene may also change. This is not limited herein.

In some embodiments, a rule for determining, by the terminal device, the master camera module and the slave camera module that are suitable for shooting the current image shooting scene may be manually configured. The terminal device may determine, according to the manually configured rule, the master camera module and the slave camera module that are suitable for shooting the current image shooting scene.

A specific manner in which the terminal device determines the master camera module and the slave camera module that are suitable for shooting the current image shooting scene is not limited in embodiments of this application.

After determining the master camera module and the slave camera module that are suitable for shooting the current image shooting scene, the terminal device may separately determine the minimum exposure frame rate of the master camera module and the minimum exposure frame rate of the slave camera module.

For example, as described above, when the scene information corresponding to the current image shooting scene includes the wide aperture and portrait mode and the focal length between 1X and 3X, the terminal device may determine that the color camera module is used as the master camera module, and the black-and-white camera module and the depth of field camera module are used as the slave camera modules. Because a general wide aperture and portrait mode does not relate to dynamic movement of a shot subject, and there is no excessively high requirement on a frame rate, the terminal device may determine that a minimum exposure frame rate of the color camera module is 30 FPS to ensure a good image generation effect, determine that a minimum exposure frame rate of the black-and-white camera module is 10 FPS to 12 FPS to meet a requirement for providing a brightness change, and determine that a minimum exposure frame rate of the depth of field camera module is 7.5 FPS or 10 FPS to meet a requirement for providing distance information in the scene.

Optionally, a rule for determining minimum exposure frame rates of the master camera module and the slave camera module by the terminal device may also be a manually configured rule. For example, the rule for determining the minimum exposure frame rates of the master camera module and the slave camera module may be configured by a manufacturer for the terminal device before delivery of the terminal device.

A specific manner of determining, by the terminal device, the minimum exposure frame rates of the master camera module and the slave camera module is not limited in this application.

302: Adjust an exposure frame rate of the master camera module to a first exposure frame rate, where the first exposure frame rate is greater than or equal to the minimum exposure frame rate of the master camera module.

For example, the terminal device may adjust the exposure frame rate of the master camera module to the minimum exposure frame rate of the master camera module, or adjust the exposure frame rate of the master camera module to a value greater than the minimum exposure frame rate of the master camera module. For example, if the minimum exposure frame rate of the master camera module is 30 FPS, the terminal device may adjust the exposure frame rate of the master camera module to 30 FPS, 40 FPS, 60 FPS, or the like.

It may be understood that a maximum exposure frame rate of the master camera module may be adjusted to a maximum exposure frame rate supported by the master camera module. In other words, the first exposure frame rate is less than or equal to the maximum exposure frame rate supported by the master camera module.

303: Adjust an exposure frame rate of a target slave camera module with a largest minimum exposure frame rate in slave camera modules to a second exposure frame rate, where the second exposure frame rate is greater than or equal to the minimum exposure frame rate of the target slave camera module.

As described above, one or more slave camera modules may be determined in step 301. When there is one slave camera module, the target slave camera module in step 303 is the unique slave camera module. When there are a plurality of (for example, two or more) slave camera modules, minimum exposure frame rates of the plurality of slave camera modules determined in step 301 may be the same or different. In this case, the target slave camera module in step 303 is a slave camera module with a largest minimum exposure frame rate in the plurality of slave camera modules.

It may be understood that there may be one or more target slave camera modules. For example, when a plurality of slave camera modules have a same largest minimum exposure frame rate, the plurality of slave camera modules with the largest minimum exposure frame rate are all target slave camera modules.

Optionally, when there are a plurality of target slave camera modules, in step 303, exposure frame rates of all the target slave camera modules may be adjusted based on a minimum exposure frame rate of any target slave camera module.

For example, the second exposure frame rate is equal to the minimum exposure frame rate of the target slave camera module. It is assumed that there are three slave camera modules, a minimum exposure frame rate of a first slave camera module is 18 FPS, a minimum exposure frame rate of a second slave camera module is also 18 FPS, and a minimum exposure frame rate of a third slave camera module is 10 FPS. In this case, the first slave camera module and the second slave camera module are the target slave camera modules, and in step 303, exposure frame rates of the first slave camera module and the second slave camera module may be respectively adjusted to 18 FPS. The third slave camera module may be referred to as another slave camera module.

In this application, the target slave camera module may be considered as an important camera module in all slave camera modules. In all the slave camera modules, the target slave camera module has a greater impact on an image generation effect of a final shot image obtained through multi-camera collaborative image shooting.

304: Adjust an exposure frame rate of another slave camera module other than the target slave camera module in the slave camera modules, so that the exposure frame rate of the another slave camera module meets that the second exposure frame rate is an integer multiple of the exposure frame rate of the another slave camera module, and the exposure frame rate of the another slave camera module is greater than or equal to a minimum exposure frame rate of the another slave camera module.

It may be understood that, when the second exposure frame rate is the integer multiple of the exposure frame rate of the another slave camera module, the exposure frame rate of the another slave camera module is less than or equal to the second exposure frame rate.

For example, it is assumed that a quantity of other slave camera modules than the target slave camera module in the slave camera modules is i, where i is an integer greater than 0, the second exposure frame rate is S0, a minimum exposure frame rate of a first other slave camera module is S1, a minimum exposure frame rate of a second other slave camera module is S2, ..., and a minimum exposure frame rate of an i^{th} other slave camera module is Si. In this case, a specific manner in which the terminal device adjusts an exposure frame rate of each of the other slave camera modules in step 304 may include: by using S0 as a reference, adjusting an exposure frame rate S'1 of the first other slave camera module, so that S'1 meets S0=X1*S'1, where X1 is an integer greater than 0, and S1≤S'1≤S0; adjusting an exposure frame rate S'2 of the second other slave camera module, so that S'2 meets S0=X2*S'2, where X2 is an integer greater than 0, and S2≤S'2≤S0, ...; and by analogy, adjusting an exposure frame rate S'i of the i^{th} other slave camera module, so that S'i meets S0=Xi*S'i, where Xi is an integer greater than 0, and Si≤S'i≤S0. "≤" indicates less than or equal to. "*" indicates multiplying.

Optionally, in a process in which the terminal device adjusts the exposure frame rate of each of the other slave camera modules in the foregoing manner, for the i^{th} other slave camera module, when there are a plurality of combinations of Xi and S'i corresponding to the i^{th} other slave camera module, the terminal device may adjust the exposure frame rate S'i of the i^{th} other slave camera module to a smallest exposure frame rate in the plurality of combinations.

For example, it is assumed that S0 is 30 FPS, and the minimum exposure frame rate Si of the i^{th} other slave camera module is 10 FPS. In this case, when the terminal device adjusts the exposure frame rate S'i of the i^{th} other slave camera module, so that S'i meets S0=Xi*S'i, where Xi is an integer greater than 0, and Si≤S'i≤S0, combinations of Xi and S'i may include the following three types shown in (1) to (3):
(1) Xi is 1, and S'i is 30 FPS;
(2) Xi is 2, and S'i is 15 FPS; and
(3) Xi is 3, and S'i is 10 FPS.

In this case, the terminal device may adjust the exposure frame rate S'i of the i^{th} other slave camera module to 10 FPS.

In other words, for the i^{th} other slave camera module, when a range from the minimum exposure frame rate of the other slave camera module to the second exposure frame rate includes a plurality of S'i, and the second exposure frame rate is an integer multiple of S'i, the terminal device may configure a minimum value of the plurality of S'i as the exposure frame rate of the i^{th} other slave camera module.

Certainly, in a process in which the terminal device adjusts the exposure frame rate of each of the other slave camera modules in the foregoing manner, for the i^{th} other slave camera module, when there are a plurality of combinations of Xi and S'i corresponding to the i^{th} other slave camera module, the terminal device may alternatively adjust the exposure frame rate S'i of the i^{th} other slave camera module to any exposure frame rate in the plurality of combinations. This is not limited herein.

For example, the terminal device determines that the master camera module is a color camera module, the slave camera module is a black-and-white camera module and a depth of field camera module, a minimum exposure frame rate of the color camera module is 30 FPS, a minimum exposure frame rate of the black-and-white camera module is 12 FPS, and a minimum exposure frame rate of the depth of field camera module is 10 FPS. In embodiments of this application, the black-and-white camera module may be a target slave camera module, and the depth of field camera module may be another slave camera module. The terminal device may adjust, in the foregoing manner, an exposure frame rate of the color camera module to 30 FPS (namely, the first exposure frame rate), adjust an exposure frame rate of the black-and-white camera module to 12 FPS (namely, the second exposure frame rate), and adjust an exposure frame rate of the depth of field camera module to 12 FPS (that is, the second exposure frame rate is one time the exposure frame rate of the depth of field camera module).

The process described in step 301 to step 304 is a process in which the terminal device determines, from the configured camera modules, a master camera module and a slave camera module that need to be used for image shooting, and configures different exposure frame rates for the master camera module and the slave camera module.

In this application, the master camera module may be referred to as a first camera module, the target slave camera module may be referred to as a second camera module, and another slave camera module may be referred to as a third camera module.

It should be noted that an execution sequence of step 302 to step 304 is not limited in this application. For example, step 302 to step 304 may be performed simultaneously, or step 303 and step 304 may be performed before step 302, or step 303 may be performed after step 304.

For example, step 302 to step 304 are performed simultaneously. The terminal device may pre-determine the first exposure frame rate, the second exposure frame rate, and a target value of the exposure frame rate of each of the other slave camera modules (referring to the descriptions in step 304), and then separately configure the exposure frame rates of the master camera module and the slave camera modules.

In addition, it should be further noted that, for some scenarios, a quantity of other slave camera modules may be 0. For example, when there is one slave camera module, there is only a target slave camera module, and there is no other slave camera module. For another example, when there are a plurality of slave camera modules, and minimum exposure frame rates of the plurality of slave camera modules are the same, only target slave camera modules exist, and there is no other slave camera module. For the case in which a quantity of other slave camera modules is zero, step 304 actually does not exist in the image shooting method provided in embodiments of this application.

The following continues to describe a process in which the terminal device controls, based on the exposure frame rate of the master camera module and the exposure frame rate of the slave camera module, time at which the slave camera module starts post-exposure image output.

305: Configure, for the target slave camera module based on the first exposure frame rate and the second exposure frame rate, a quantity of intervals of sensing a pulse signal, and configure pulse signal sending delay (delay) time for the master camera module based on the first exposure frame rate and the second exposure frame rate.

The quantity, configured for the target slave camera module, of intervals of sensing the pulse signal indicates that the target slave camera module senses the pulse signal sent by the master camera module once at an interval of times that are of the quantity and that are of receiving the pulse signal. For example, if a quantity, configured by the terminal device for a target slave camera module, of intervals of sensing the pulse signal is two, the target slave camera module senses the pulse signal sent by the master camera module once at an interval of two times of receiving the pulse signal. That the target slave camera module senses the pulse signal sent by the master camera module at a specific time indicates that the target slave camera module may respond to the pulse signal sent by the master camera module at this time, and start to shoot a current frame.

For example, the first exposure frame rate is Sm, and the second exposure frame rate is Ss. That the terminal device configures, for the target slave camera module based on the first exposure frame rate and the second exposure frame rate, the quantity of intervals of sensing the pulse signal may include: determining, by decreasing a frame rate based on Ss with a reference of Sm, a first frame rate Ss1 that can exactly divide Sm; and configuring a value obtained by subtracting 1 from a quotient of dividing Sm by Ss1 as the quantity, configured for the target slave camera module, of intervals of sensing the pulse signal. Alternatively, it may be understood that the quantity, configured for the target slave camera module, of intervals of sensing the pulse signal is actually a value obtained by rounding down a value obtained by dividing Sm by Ss.

In other words, the terminal device may determine, by decreasing a frame rate based on Ss with a reference of Sm, a first frame rate Ss1 that meets Sm=Y·Ss1 and Y is an integer greater than 0, and configure a value obtained by subtracting 1 from Y as the quantity, configured for the target slave camera module, of intervals of sensing the pulse signal. Alternatively, the terminal device may configure a value obtained by rounding down a value obtained by dividing Sm by Ss with a reference of Sm as the quantity, configured for the target slave camera module, of intervals of sensing the pulse signal.

For example, it is assumed that the first exposure frame rate is 30 FPS, and the second exposure frame rate is 18 FPS. In this case, the terminal device may determine, by decreasing a frame rate based on 18 FPS with a reference of 30 FPS, that a first frame rate that can exactly divide 30 FPS is 15 FPS, to obtain a value of 1 obtained by subtracting 1 from a quotient of dividing 30 FPS by 15 FPS, and configure the quantity, configured for the target slave camera module, of intervals of sensing the pulse signal as one. Alternatively, the terminal device may first obtain a value of 1 by rounding down a value obtained by dividing 30 FPS by 18 FPS with a reference of 30 FPS, and then, may configure the quantity, configured for the target slave camera module, of intervals of sensing the pulse signal as one. It can be seen that results determined in the two manners are the same.

Similarly, for example, the first exposure frame rate is Sm, and the second exposure frame rate is Ss. That the terminal device configures the pulse signal sending delay time for the master camera module based on the first exposure frame rate and the second exposure frame rate may include: determining, by decreasing a frame rate based on Ss with a reference of Sm, a first frame rate Ss1 that can exactly divide Sm (refer to the foregoing descriptions, where details are not described again); and configuring a difference (which may be an absolute value of the difference) between a frame length (frame interval duration) corresponding to Ss1 and a frame length corresponding to Ss as the pulse signal sending delay time for the master camera module.

For example, as described above, when the first exposure frame rate is 30 FPS, and the second exposure frame rate is 18 FPS, the terminal device may determine, by decreasing a frame rate based on 18 FPS with a reference of 30 FPS, that a first frame rate that can exactly divide 30 FPS is 15 FPS. In this case, the terminal device may determine that a frame length corresponding to 15 FPS is approximately 66.667 milliseconds (ms), a frame length corresponding to 18 FPS is approximately 55.556 ms, and a difference between the two frame lengths is 11.11 ms. The terminal device may configure the pulse signal sending delay time for the master camera module to 11.11 ms.

Optionally, in some other implementations, the terminal device may alternatively configure, based on a frame length corresponding to the first exposure frame rate and a frame length corresponding to the second exposure frame rate, the quantity of intervals of sensing the pulse signal for the target slave camera module, and the pulse signal sending delay time for the master camera module. The principle is similar to the manner of configuring the quantity of intervals and the delay time based on the first exposure frame rate and the second exposure frame rate.

For example, the terminal device may determine, by increasing a frame length based on the frame length (for example, L_{Ss}) corresponding to the second exposure frame rate with a reference of the frame length (for example, L_{Sm}) corresponding to the first exposure frame rate, a first frame rate Lssi that can be exactly divided by L_{Sm}; and configure a value obtained by subtracting 1 from a quotient of dividing L_{Ss1} by L_{Sm} as the quantity, configured for the target slave camera module, of intervals of sensing the pulse signal.

For another example, the terminal device may determine, by increasing a frame length based on the frame length (for example, L_{Ss}) corresponding to the second exposure frame rate with a reference of the frame length (for example, L_{Sm}) corresponding to the first exposure frame rate, the first frame rate Lssi that can be exactly divided by L_{Sm}; and configure a difference (which may be an absolute value of the difference) between L_{Ss1} and L_{Ss} as the pulse signal sending delay time for the master camera module.

In this application, Ss1 may be referred to as a third exposure frame rate. It may be understood that the third exposure frame rate is an intermediate value for calculation, and is not actually configured for a camera module. The third exposure frame rate (Ss1) is a largest value in all values that are less than or equal to Ss and that can exactly divide Sm. In other words, the pulse signal delay time is related to Sm and Ss.

306: Configure, for the another slave camera module based on the second exposure frame rate, an exposure frame rate of the another slave camera module, and the quantity of intervals of sensing the pulse signal by the target slave camera module, a quantity of intervals of sensing the pulse signal.

Similar to the quantity of intervals of sensing the pulse signal by the target slave camera module, the quantity, configured for the another slave camera module, of intervals of sensing the pulse signal indicates that the another slave camera module senses the pulse signal sent by the master camera module once at an interval of times that are of the quantity and that are of receiving the pulse signal. For example, if a quantity, configured by the terminal device for another slave camera module, of intervals of sensing the pulse signal is two, the another slave camera module senses the pulse signal sent by the master camera module once at an interval of two times of receiving the pulse signal. That the another slave camera module senses the pulse signal sent by the master camera module at a specific time indicates that the another slave camera module may respond to the pulse signal sent by the master camera module at this time, and start to shoot a current frame.

For example, the second exposure frame rate is Ss, the exposure frame rate of the another slave camera module is Sr (where Ss is an integer multiple of Sr), and the quantity of intervals of sensing the pulse signal by the target slave camera module is (Y-1). That the terminal device configures, for the another slave camera module based on the second exposure frame rate, the exposure frame rate of the another slave camera module, and the quantity of intervals of sensing the pulse signal by the target slave camera module, the quantity of intervals of sensing the pulse signal may include: determining a value obtained by subtracting 1 from a quotient of dividing Ss by Sr, and configuring a sum of the value obtained by subtracting 1 from the quotient of dividing Ss by Sr and (Y-1) as the quantity of intervals of sensing the pulse signal by the another slave camera module.

In other words, a quantity, configured for the another slave camera module, of intervals of sensing a first signal is equal to a sum of a quantity, configured for the target slave camera module, of intervals of sensing the first signal and a first value, and the first value is a value obtained by subtracting 1 from a quotient of dividing Ss by Sr.

For example, it is assumed that the second exposure frame rate is 24 FPS, an exposure frame rate of another slave camera module is 24 FPS, and the quantity of intervals of sensing the pulse signal by the target slave camera module is one. In this case, the terminal device may configure the quantity of intervals of sensing the pulse signal by the another slave camera module as (24/24-1+1=1) times.

For another example, it is assumed that the second exposure frame rate is 24 FPS, an exposure frame rate of another slave camera module is 12 FPS, and the quantity of intervals of sensing the pulse signal by the target slave camera module is one. In this case, the terminal device may configure the quantity of intervals of sensing the pulse signal by the another slave camera module as (24/12-1+1=2) times.

In some embodiments, a correspondence between the second exposure frame rate and the quantity of intervals of sensing the pulse signal by the another slave camera module may be preset in the terminal device. The correspondence may be obtained in the foregoing manner of determining the quantity of intervals of sensing the pulse signal by the another slave camera module, and is configured in the terminal device in advance. The terminal device may query the correspondence based on the second exposure frame rate and the exposure frame rate of the another slave camera module, to determine the quantity of intervals of sensing the pulse signal by the another slave camera module.

It should be further noted that, similar to step 304, for the scenario in which the quantity of other slave camera modules is zero, step 306 actually does not exist in the image shooting method provided in embodiments of this application.

307: Perform image shooting by using the master camera module and the slave camera module, where in the image shooting process, the master camera module sends the pulse signal after the pulse signal sending delay time from a moment corresponding to a frame header of each frame; and the slave camera module senses, based on the configured quantity of intervals of sensing the pulse signal, the pulse signal sent by the master camera module, and starts image shooting of a current frame after sensing the pulse signal.

It should be understood that the slave camera module herein may include a target slave camera module and another slave camera module. In other words, for any slave camera module, the slave camera module may start image shooting of a current frame in response to sensing the pulse signal sent by the master camera module.

Optionally, the terminal device may configure a frequency at which the master camera module sends the pulse signal, so that the master camera module sends the pulse signal after the pulse signal sending delay time from the moment corresponding to the frame header of each frame. For example, it is assumed that the pulse signal sending delay time is Δt, and a moment corresponding to a frame header of a frame shot by the master camera module is t. In this case, an actual moment at which the master camera module sends the pulse signal is (t+Δt).

The process described in step 305 to step 307 is a process in which the terminal device controls, based on the exposure frame rate of the master camera module and the exposure frame rate of the slave camera module, time at which the slave camera module starts post-exposure image output. The master camera module sends the pulse signal after the pulse signal sending delay time from the moment corresponding to the frame header of each frame. The slave camera module senses the pulse signal sent by the master camera module based on the configured quantity of intervals of sensing the pulse signal, and starts image shooting of the current frame after sensing the pulse signal, so that post-exposure image output of the slave camera module can be basically synchronized with post-exposure image output of the master camera module at a frame trailer.

In this application, a current frame shot by the master camera module may be referred to as a first frame, and a current frame shot by the target slave camera module may be referred to as a second frame. The terminal device may control the master camera module to start to shoot the first frame, and control the slave camera module to start to shoot the second frame. Start time of the second frame is the pulse signal delay time later than start time of the first frame, and the pulse signal delay time is related to the first exposure frame rate and the second exposure frame rate.

The following uses an example in which the pulse signal is an XVS pulse signal, and separately uses two examples in which the slave camera module includes only a target slave camera module, and the slave camera module includes a target slave camera module and another slave camera module for description. It should be noted that a specific type of the pulse signal is not limited in this application. For example, the pulse signal in embodiments of this application may alternatively be a VSYNC pulse signal, an FSIN pulse signal, or the like. In this application, pulse signals such as the XVS pulse signal, the VSYNC pulse signal, and the FSIN pulse signal may all be referred to as a first signal.

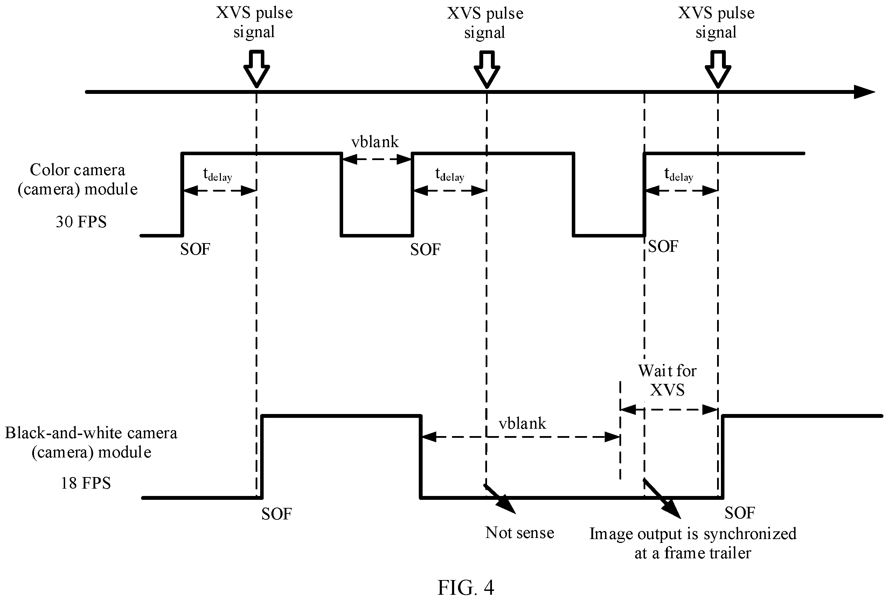

For example, FIG. 4 is a schematic diagram of a hard synchronization control principle in a scenario in which the slave camera module includes only a target slave camera module according to an embodiment of this application. As shown in FIG. 4, it is assumed that in an image shooting scene (for example, a scene of a dark evening), the terminal device determines that the master camera module is a color camera module, the slave camera module is a black-and-white camera module, a minimum exposure frame rate of the color camera module is 30 FPS, a minimum exposure frame rate of the black-and-white camera module is 18 FPS, the color camera module has high image shooting performance, and the black-and-white camera module may collect grayscale information and provide richer brightness changes. In this case, the slave camera module configured to perform multi-camera collaborative image shooting includes only one target slave camera module (namely, a black-and-white camera module), and there is no other slave camera module.

In the foregoing manner, the terminal device may adjust an exposure frame rate of the color camera module to 30 FPS, adjust an exposure frame rate of the black-and-white camera module to 18 FPS, and configure, based on 30 FPS and 18 FPS, a quantity of intervals of sensing the pulse signal to one for the black-and-white camera module, and pulse signal sending delay time to 11.11 ms (where t_{delay} shown in the figure is the pulse signal sending delay time) for the color camera module. In a process of image shooting by using the color camera module and the black-and-white camera module, the color camera module may send an XVS pulse signal after a moment corresponding to a frame header (SOF) of each frame is delayed for 11.11 ms based on 30 FPS. The black-and-white camera module may sense the XVS pulse signal sent by the color camera module once at an interval of one time of receiving the XVS pulse signal, and start image shooting of a current frame after sensing the XVS pulse signal sent by the color camera module each time. In other words, after sensing the XVS pulse signal sent by the color camera module once, the black-and-white camera module does not sense the XVS pulse signal sent by the color camera module that is received for the first time subsequently, waits for the XVS pulse signal after completing image shooting of the current frame, and senses the XVS pulse signal sent by the color camera module that is received for the second time.

With reference to FIG. 4, it can be learned that the post-exposure image output of the color camera module is synchronized with the post-exposure image output of the black-and-white camera module at the frame trailer, and timestamps of the post-exposure image output of the color camera module and the post-exposure image output of the black-and-white camera module are consistent. For example, duration of every two frames of the color camera module is 66.66 ms, an actual interval between each frame of the black-and-white camera module is 66.66 ms, and actual effective duration of each frame of the color camera module and the black-and-white camera module is consistent, so as to keep timestamps of the post-exposure image output consistent.

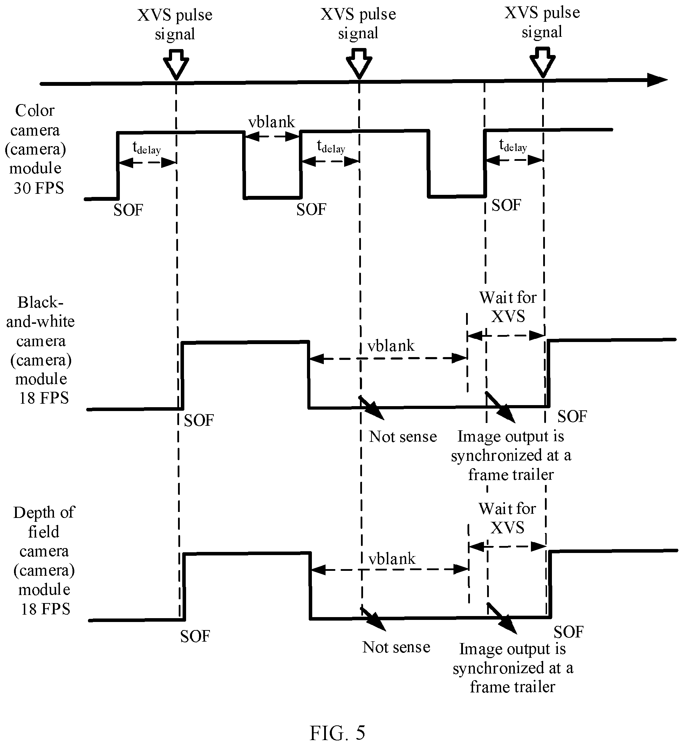

For example, FIG. 5 is a schematic diagram of a hard synchronization control principle in a scenario in which the slave camera module includes a target slave camera module and another slave camera module according to an embodiment of this application. As shown in FIG. 5, it is assumed that the terminal device determines that the master camera module is a color camera module, the slave camera module is a black-and-white camera module and a depth of field camera module, a minimum exposure frame rate of the color camera module is 30 FPS, a minimum exposure frame rate of the black-and-white camera module is 18 FPS, and a minimum exposure frame rate of the depth of field camera module is 12 FPS. In this case, the slave camera module configured to perform multi-camera collaborative image shooting includes a target slave camera module (namely, the black-and-white camera module) and another slave camera module (namely, the depth of field camera module).

In the foregoing manner, the terminal device may adjust an exposure frame rate of the color camera module to 30 FPS, adjust an exposure frame rate of the black-and-white camera module to 18 FPS, and adjust an exposure frame rate of the depth of field camera module to 18 FPS (where the exposure frame rate of the black-and-white camera module is an integer multiple of the exposure frame rate of the depth of field camera module), and configure, based on 30 FPS and 18 FPS, a quantity of intervals of sensing the pulse signal to one for the black-and-white camera module, pulse signal sending delay time to 11.11 ms (namely, t_{delay} shown in the figure) for the color camera module, and a quantity of intervals of sensing the pulse signal to one for the depth of field camera module. In a process of image shooting by using the color camera module, the black-and-white camera module, and the depth of field camera module, the color camera module may send an XVS pulse signal after a moment corresponding to a frame header (SOF) of each frame is delayed for 11.11 ms based on 30 FPS. The black-and-white camera module and the depth of field camera module may separately sense the XVS pulse signal sent by the color camera module once at an interval of one time of receiving the XVS pulse signal, and start image shooting of a current frame after sensing the XVS pulse signal sent by the color camera module each time. In other words, after separately sensing the XVS pulse signal sent by the color camera module once, the black-and-white camera module and the depth of field camera module do not sense the XVS pulse signal sent by the color camera module that is received for the first time subsequently, wait for the XVS pulse signal after completing image shooting of the current frame, and senses the XVS pulse signal sent by the color camera module that is received for the second time.

With reference to FIG. 5, it can be learned that post-exposure image output of the color camera module, post-exposure image output of the black-and-white camera module, and post-exposure image output of the depth of field camera module are synchronized at a frame trailer, and timestamps of the post-exposure image output of the color camera module, the post-exposure image output of the black-and-white camera module, and the post-exposure image output of the depth of field camera module are consistent. For example, duration of every two frames of the color camera module is 66.66 ms, an actual interval between each frame of the black-and-white camera module is 66.66 ms, an actual interval between each frame of the depth of field camera module is also 66.66 ms, and actual effective duration of each frame of the color camera module, the black-and-white camera module, and the depth of field camera module is consistent, so as to keep timestamps of the post-exposure image output consistent.

Optionally, in embodiments of this application, a counter may be disposed inside the slave camera module, and the slave camera module may count, by using the counter, a quantity of times of receiving the XVS pulse signal sent by the master camera module. The slave camera module may determine, based on a counting result of the counter, a specific sequence number of the XVS pulse signal received this time, and determine whether the configured quantity of intervals of sensing the XVS pulse signal is reached, so as to further determine whether to sense the XVS pulse signal sent by the master camera module that is received this time.

In the manner described in step 307, the terminal device may obtain, by image shooting by using the master camera module and the slave camera module, an image corresponding to each camera module, and then the terminal device may perform fusion processing on images shot by the master camera module and the slave camera module, to obtain a final shot image. For example, the method further includes step 308.

308: Perform fusion processing on the images shot by the master camera module and the slave camera module, to obtain the final shot image.

In this application, the terminal device performs fusion processing on the images shot by the master camera module and the slave camera module, and the obtained final shot image may be referred to as a first image. For example, the terminal device may perform fusion processing on a first frame shot by the master camera module and a second frame shot by the slave camera module, to obtain the first image.

Optionally, when performing fusion processing on the images shot by the master camera module and the slave camera module, the terminal device may separately select, for fusion processing, a frame of image last shot by the master camera module and a frame of image last shot by the slave camera module. For example, after the color camera module shoots a frame of image, when the terminal device performs fusion processing on images shot by the color camera module, the black-and-white camera module, and the depth of field camera module, if the black-and-white camera module and the depth of field camera module separately sense the XVS pulse signal and shoot a frame of image when the color camera module shoots the frame of image, the terminal device performs fusion processing on the three frames of images currently shot by the color camera module, the black-and-white camera module, and the depth of field camera module. When the color camera module shoots this frame of image, if the black-and-white camera module senses the XVS pulse signal and shoots a frame of image, but the depth of field camera module does not sense the XVS pulse signal, the terminal device may perform fusion processing on current frames of images shot by the color camera module and the black-and-white camera module and an image shot by the depth of field camera module last time after sensing the XVS pulse signal.

In the image shooting method provided in embodiments of this application, the terminal device configures different exposure frame rates for the master camera module and the slave camera module, so that the master camera module and the slave camera module perform image shooting at the different exposure frame rates. This can minimize power consumption generated by the slave camera module at an unnecessarily high frame rate, and effectively reduces power consumption of the terminal device in a multi-camera collaborative image shooting scenario. In addition, in the image shooting process, the time at which the slave camera module starts to output the image after exposure is controlled based on the exposure frame rate of the master camera module and the exposure frame rate of the slave camera module. In this way, post-exposure image output of the slave camera module is synchronized with post-exposure image output of the master camera module at a frame trailer. This ensures picture consistency of images shot by the master camera module and the slave camera module, so as to improve an image generation effect of a final shot image.

In other words, the target slave camera module in the method may implement hard synchronization with the master camera module at any frame rate. In the method, power consumption of the terminal device can be reduced to a maximum extent while an image shooting effect of a plurality of camera modules is ensured.

For example, in the example shown in FIG. 5, the color camera module may perform image shooting at an exposure frame rate of 30 FPS, and the black-and-white camera module and the depth of field camera module may separately perform image shooting at an exposure frame rate of 18 FPS. In addition, when the color camera module, the black-and-white camera module, and the depth of field camera module perform image shooting, post-exposure image output is synchronized at a frame trailer, to ensure picture consistency. Because exposure frame rates of the black-and-white camera module and the depth of field camera module are lower than the exposure frame rate of the color camera module, and do not need to be consistent with the exposure frame rate of the color camera module, power consumption of the black-and-white camera module and the depth of field camera module may be lower.

Optionally, when the terminal device performs image shooting by using the master camera module and the slave camera module, in a first-frame pre-exposure phase of stream-on working of the master camera module and each slave camera module, the terminal device may first control first frame lengths of the master camera module and each slave camera module to be the same (that is, frame lengths of first frames of the post-exposure image output are the same), to ensure that time at which the master camera module and each slave camera module output a first frame is the same. In this way, the master camera module and each slave camera module maintain a same frame interval when first frames are output. Then, starting from the second frame, the terminal device controls the master camera module and each slave camera module to perform image shooting in the foregoing manner.

For example, the master camera module in the foregoing embodiment is a color camera module, and the slave camera module is a black-and-white camera module and a depth of field camera module. It is assumed that frame intervals respectively corresponding to the color camera module, the black-and-white camera module, and the depth of field camera module in an image shooting process are approximately 33 milliseconds (ms), 55 ms, and 55 ms. In this case, the terminal device may control, in a first-frame pre-exposure phase of stream-on working of the color camera module, the black-and-white camera module, and the depth of field camera module, frame lengths of first frames respectively corresponding to the color camera module, the black-and-white camera module, and the depth of field camera module to be the same. For example, the terminal device may compress duration of vblank of first frames corresponding to the black-and-white camera module and the depth of field camera module, and control the frame lengths of the first frames corresponding to the color camera module, the black-and-white camera module, and the depth of field camera module to be 33 ms; or the terminal device may extend duration of vblank of a first frame corresponding to the color camera module, and control the frame lengths of the first frames corresponding to the color camera module, the black-and-white camera module, and the depth of field camera module to be 55 ms; or the like.

A specific implementation in which the terminal device controls the frame lengths of the first frames of the master camera module and each slave camera module to be the same is not limited in this application.

Optionally, the terminal device may deliver a first-frame pre-exposed frame length to the master camera module and each slave camera module, and the master camera module and each slave camera module may expose the first frames based on the first-frame pre-exposed frame length delivered by the terminal device.

The foregoing embodiment mainly describes a scenario in which hard synchronization is implemented between the master camera module and the slave camera module when the master camera module and the slave camera module perform stream-on working in the image shooting method provided in embodiments of this application. In some other possible scenarios, scene information of an image shooting environment may change, and the terminal device needs to adjust some or all camera modules based on the change of the scene information, to ensure a better image shooting effect.

For example, when brightness of the image shooting environment changes, the terminal device needs to adjust exposure time of some or all camera modules to maintain consistent brightness for image shooting. For example, when the ambient brightness is very low, to ensure that picture brightness is consistent, corresponding long exposure time is usually required. If the exposure time is longer than a frame length of a current frame, the frame length needs to be correspondingly increased. In other words, a frame rate needs to be decreased, which is referred to as frame rate decrease for short. When the ambient brightness changes from a dark scene to normal brightness, an excessively long frame length needs to be restored. In other words, a frame rate needs to be increased, which is referred to as frame rate increase for short. When the ambient brightness changes greatly or sensitivities of components differs greatly, flexibly increasing or decreasing frame rates of camera modules can bring a better image shooting effect, achieve consistent exposure effects between a plurality of cameras and better exposure consistency at different ambient brightness, and improve an image fusion effect.

The following describes an example of a case in which a frame rate is increased or decreased in the image shooting method provided in embodiments of this application.

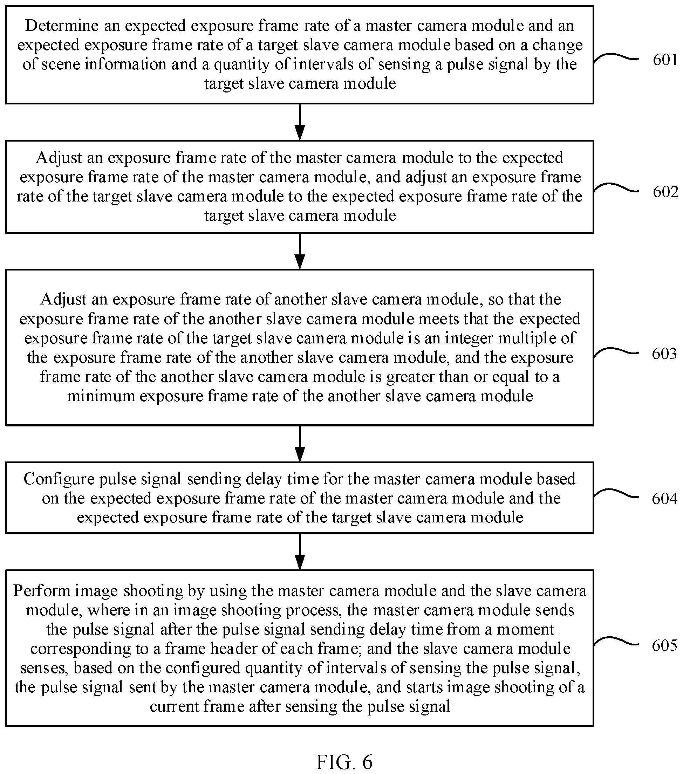

For example, FIG. 6 is another schematic flowchart of an image shooting method according to an embodiment of this application. As shown in FIG. 6, the method may include the following steps.

601: Determine an expected exposure frame rate of a master camera module and an expected exposure frame rate of a target slave camera module based on a change of scene information and a quantity of intervals of sensing a pulse signal by the target slave camera module.

Because the quantity of intervals of sensing the pulse signal by the target slave camera module is determined in a stream-on phase (the procedure shown in FIG. 3), based on a constraint of hard synchronization, the expected exposure frame rate of the master camera module and the expected exposure frame rate of the target slave camera module meet the following relationship: The expected exposure frame rate of the master camera module is less than or equal to Z times the expected exposure frame rate of the target slave camera module, or Z times a frame length corresponding to the expected exposure frame rate of the master camera module is greater than or equal to a frame length corresponding to the expected exposure frame rate of the target slave camera module, where Z is an integer greater than 0, and Z is equal to a value obtained by adding 1 to the quantity, configured for the target slave camera module, of intervals of sensing the pulse signal. In other words, Z is equal to Y in the foregoing embodiment.

For example, the expected exposure frame rate of the master camera module is Sm_new, and the expected exposure frame rate of the target slave camera module is Ss_new. A relationship that is met between the expected exposure frame rate of the master camera module and the expected exposure frame rate of the target slave camera module may be represented as: Sm_new≤Z*Ss_new. Alternatively, the frame length corresponding to the expected exposure frame rate of the master camera module is L_{Sm_new}, and the expected exposure frame rate of the target slave camera module is L_{Ss_new}. A relationship that is met between the expected exposure frame rate of the master camera module and the expected exposure frame rate of the target slave camera module may be represented as: L_{Sm_new}*Z≥L_{Ss_new}.

When the expected exposure frame rate of the master camera module and the expected exposure frame rate of the target slave camera module meet the foregoing relationship, an expected frame rate combination may always be implemented between the expected exposure frame rate of the master camera module and the expected exposure frame rate of the target slave camera module.

Optionally, compared with a first exposure frame rate and a second exposure frame rate in a stream-on phase, when the expected exposure frame rate of the master camera module and the expected exposure frame rate of the target slave camera module are determined based on the change of the scene information and the quantity of intervals of sensing the pulse signal by the target slave camera module, the following cases may exist: (1) The expected exposure frame rate of the master camera module changes compared with the first exposure frame rate, and the expected exposure frame rate of the target slave camera module changes compared with the second exposure frame rate. (2) The expected exposure frame rate of the master camera module is equal to the first exposure frame rate (that is, does not change), and the expected exposure frame rate of the target slave camera module changes compared with the second exposure frame rate. (3) The expected exposure frame rate of the master camera module changes compared with the first exposure frame rate, and the expected exposure frame rate of the target slave camera module is equal to the second exposure frame rate (that is, does not change).

It should be noted that, cases to which the expected exposure frame rate of the master camera module and the expected exposure frame rate of the target slave camera module belong are determined by the terminal device based on a change of specific scene information. A determining mechanism of the terminal device is not limited in this application.

For example, it is assumed that, in the streaming initiation phase, the first exposure frame rate of the master camera module is 30 FPS, and the second exposure frame rate of the target slave camera module is 24 FPS. In this case, pulse signal sending delay time (for example, represented by an "XVS delay") for the master camera module in the streaming initiation phase is 25 ms. At this time, duration of every two frames of the master camera module is 66.66 ms, a frame length of the target slave camera module is 41.66 ms, and an actual interval between each frame is 66.66 ms. Actual effective duration of each frame of the master camera module and the target slave camera module is consistent, and exposure timestamps are consistent. However, when an image shooting environment suddenly becomes dark and brightness is low, it is assumed that, at this time, the target slave camera module is less sensitive to light and needs exposure for more than 40 ms. In this case, a frame rate of the master camera module may remain unchanged (that is, the expected exposure frame rate of the master camera module is equal to the first exposure frame rate), and a frame rate of the target slave camera module is reduced, to meet a requirement for long exposure (that is, the expected exposure frame rate of the target slave camera module is less than the second exposure frame rate). For example, when the exposure frame rate of the target slave camera module needs to be reduced from 24 FPS to 15 FPS, it may be determined in step 601 that the expected exposure frame rate of the target slave camera module is 15 FPS.

Similarly, a frame rate increase scenario is similar to a frame rate decrease scenario. Examples are not described in detail.

602: Adjust an exposure frame rate of the master camera module to the expected exposure frame rate of the master camera module, and adjust an exposure frame rate of the target slave camera module to the expected exposure frame rate of the target slave camera module.

603: Adjust an exposure frame rate of another slave camera module, so that the exposure frame rate of the another slave camera module meets that the expected exposure frame rate of the target slave camera module is an integer multiple of the exposure frame rate of the another slave camera module, and the exposure frame rate of the another slave camera module is greater than or equal to a minimum exposure frame rate of the another slave camera module.

The manner of adjusting the exposure frame rate of the another slave camera module to enable the exposure frame rate of the another slave camera module to meet the following condition that the expected exposure frame rate of the target slave camera module is an integer multiple of the exposure frame rate of the another slave camera module in step 603 may be the manner of adjusting the exposure frame rate of the another slave camera module to enable the exposure frame rate of the another slave camera module to meet the following condition that the second exposure frame rate is an integer multiple of the exposure frame rate of the another slave camera module in step 304. Details are not described again.

It should be further understood that, similar to step 304, for the scenario in which the quantity of other slave camera modules is zero, step 603 actually does not exist in the image shooting method provided in embodiments of this application.

604: Configure pulse signal sending delay time for the master camera module based on the expected exposure frame rate of the master camera module and the expected exposure frame rate of the target slave camera module.

For the process of configuring the pulse signal sending delay time for the master camera module based on the expected exposure frame rate of the master camera module and the expected exposure frame rate of the target slave camera module, refer to the process of configuring the pulse signal sending delay time for the master camera module based on the first exposure frame rate and the second exposure frame rate in step 305.

For example, the expected exposure frame rate of the master camera module is Sm_new, and the expected exposure frame rate of the target slave camera module is Ss_new. That the terminal device configures the pulse signal delay time for the master camera module based on Sm_new and Ss_new may include: determining, by decreasing a frame rate based on Ss_new with a reference of Sm_new, a first frame rate Ss1_new that can exactly divide Sm_new; and configuring a difference (which may be an absolute value of the difference) between a frame length corresponding to Ss1_new and a frame length corresponding to Ss_new as the pulse signal sending delay time for the master camera module.

For example, as described above, when the expected exposure frame rate of the master camera module is 30 FPS, and the expected exposure frame rate of the target slave camera module is 15 FPS, the terminal device may determine, by decreasing a frame rate based on 15 FPS with a reference of 30 FPS, that a first frame rate that can exactly divide 30 FPS is 15 FPS (itself). In this case, the terminal device may determine that the difference between the frame length corresponding to Ss1_new and the frame length corresponding to Ss_new is 0 ms. The terminal device may configure the pulse signal sending delay time for the master camera module to 0 ms.

Optionally, in some other implementations, the terminal device may determine, by increasing a frame length based on the frame length (for example, L_{Ss_new}) corresponding to the expected exposure frame rate of the target slave camera module with a reference of the frame length (for example, L_{Sm_new}) corresponding to the expected exposure frame rate of the master camera module, the first frame rate L_{Ss1}_new that can be exactly divided by L_{Sm_new}; and configure a difference (which may be an absolute value of the difference) between L_{Ss1}_new and L_{Ss_new} as the pulse signal sending delay time for the master camera module. This is not limited herein.

605: Perform image shooting by using the master camera module and the slave camera module, where in the image shooting process, the master camera module sends the pulse signal after the pulse signal sending delay time from a moment corresponding to a frame header of each frame; and the slave camera module senses, based on the configured quantity of intervals of sensing the pulse signal, the pulse signal sent by the master camera module, and starts image shooting of a current frame after sensing the pulse signal.

For step 605, refer to the descriptions in step 307. Details are not described again.

It should be understood that the pulse signal sending delay time in step 605 is the pulse signal sending delay time configured for the master camera module based on the expected exposure frame rate of the master camera module and the expected exposure frame rate of the target slave camera module in step 604. The pulse signal sending delay time in step 307 indicates the pulse signal sending delay time configured for the master camera module based on the first exposure frame rate and the second exposure frame rate in step 305.

In this application, the pulse signal sending delay time configured for the master camera module in step 305 may be referred to as first duration, and the pulse signal sending delay time configured for the master camera module in step 605 may be referred to as second duration. The expected exposure frame rate of the master camera module may be referred to as a fourth exposure frame rate, and the expected exposure frame rate of the target slave camera module may be referred to as a fifth exposure frame rate. In other words, in this application, after detecting that the scene information of the image shooting scene changes, the terminal device may adjust an exposure frame rate of a first camera module to the fourth exposure frame rate, adjust an exposure frame rate of a second camera module to the fifth exposure frame rate, control the first camera module to perform image shooting at the fourth exposure frame rate, and control the second camera module to perform collaborative image shooting with the first camera module at the fifth exposure frame rate.

When the terminal device controls the first camera module to perform image shooting at the fourth exposure frame rate, and controls the second camera module to perform collaborative image shooting with the first camera module at the fifth exposure frame rate, a current frame shot by the first camera module may be referred to as a third frame, and a current frame shot by the second camera module may be referred to as a fourth frame. In other words, that the terminal device controls the first camera module to perform image shooting at the fourth exposure frame rate, and controls the second camera module to perform collaborative image shooting with the first camera module at the fifth exposure frame rate may include: The terminal device controls the first camera module to start to shoot the third frame, and controls the second camera module to start to shoot the fourth frame, where start time of the fourth frame is the second duration later than start time of the third frame, and the second duration is related to the fourth exposure frame rate and the fifth exposure frame rate.

That the second duration is related to the fourth exposure frame rate and the fifth exposure frame rate includes: The second duration is equal to a difference between a frame length corresponding to a sixth exposure frame rate and a frame length corresponding to the fifth exposure frame rate, and the sixth exposure frame rate is a largest value in all values that are less than or equal to the fifth exposure frame rate and that can exactly divide the fourth exposure frame rate. For example, the sixth exposure frame rate is Ss1_new.

The process described in the foregoing step 601 to step 605 is a process in which the terminal device adjusts an exposure frame rate of a camera module and then performs image shooting by using the camera module at an adjusted exposure frame rate in a frame rate increase/decrease scenario. After related configuration in the frame rate increase/decrease scenario is completed through the process described in step 601 to step 604, during image shooting in step 605, post-exposure image output of the slave camera module may still be synchronized with post-exposure image output of the master camera module at a frame trailer.

In other words, in the image shooting method provided in embodiments of this application, for a scenario in which a frame rate is increased/decreased after the scene information of the image shooting scene changes, it can still be ensured that post-exposure image output of the slave camera module is synchronized with post-exposure image output of the master camera module at a frame trailer, so as to ensure picture consistency of images shot by the master camera module and the slave camera module in the frame rate increase/decrease scenario, and improve an image generation effect of a final shot image.

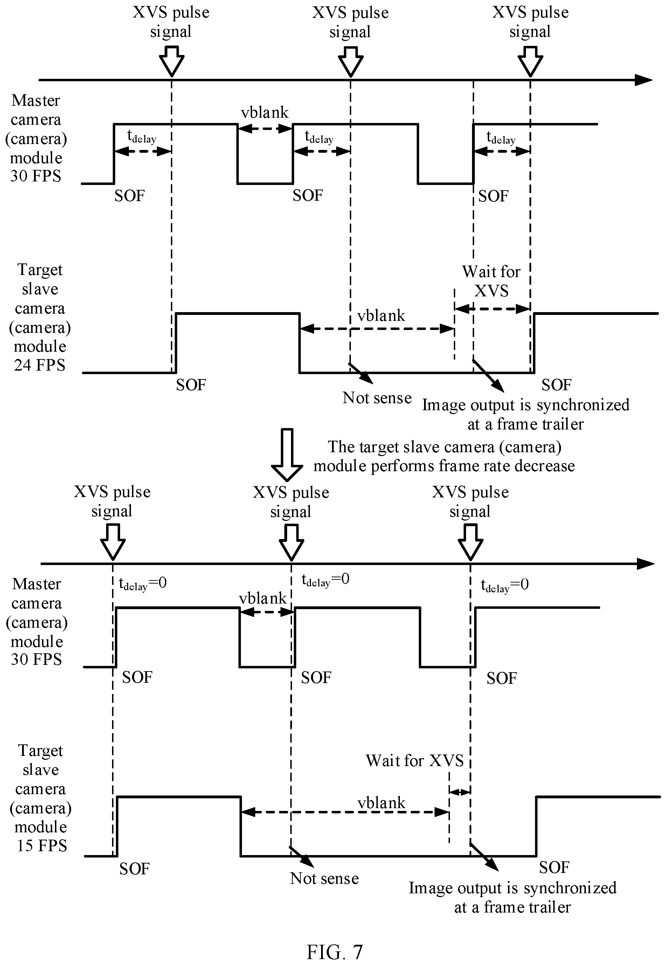

For example, FIG. 7 is a schematic diagram of a frame rate decrease principle in a scenario in which a slave camera module includes only a target slave camera module according to an embodiment of this application. As shown in FIG. 7, it is assumed that in an image shooting scene, a terminal device determines a master camera module and a slave camera module (as a target slave camera module), at a streaming initialization phase, adjusts an exposure frame rate of the master camera module to 30 FPS, adjusts an exposure frame rate of the slave camera module to 24 FPS, and configure, based on 30 FPS and 24 FPS, a quantity of intervals of sensing a pulse signal to one for the slave camera module, and pulse signal sending delay time to t_{delay} (where t_{delay} is 25 ms) for the master camera module. In a process of image shooting by using the master camera module and the slave camera module, the master camera module may send an XVS pulse signal after a moment corresponding to a frame header (SOF) of each frame is delayed for t_{delay} based on 30 FPS. The slave camera module may sense the XVS pulse signal sent by the master camera module once at an interval of one time of receiving the XVS pulse signal, and start image shooting of a current frame after sensing the XVS pulse signal sent by the master camera module each time.

When an image shooting environment suddenly becomes dark and brightness is low, it is assumed that, at this time, the slave camera module is less sensitive to light and needs exposure for more than 40 ms. In this case, when a frame rate of the master camera module may remain unchanged, and a frame rate of the slave camera module is reduced to 15 FPS, pulse signal sending delay time that needs to be configured for the master camera module is t_{delay}=0 ms. In the process of image shooting by using the master camera module and the slave camera module, the master camera module may send an XVS pulse signal after a moment corresponding to a frame header (SOF) of each frame is delayed for 0 ms (that is, time of sending the XVS pulse signal is not delayed) based on 30 FPS. The slave camera module may sense the XVS pulse signal sent by the master camera module once at an interval of one time of receiving the XVS pulse signal, and start image shooting of a current frame after sensing the XVS pulse signal sent by the master camera module each time.

With reference to FIG. 7, it can be learned that the slave camera module completes frame rate decrease, and after the frame rate decrease, the master camera module and the slave camera module can still keep same timestamps of post-exposure image output.

In the image shooting method provided in embodiments of this application, when the master camera module and the slave camera module perform image shooting, for the frame rate increase/decrease scenario, only one to two frames of images need to be transited to reach the expected exposure frame rate of the master camera module and the expected exposure frame rate of the slave camera module, so that the master camera module and the slave camera module perform image shooting based on expected exposure frame rates.

In addition, it may be understood that, for the embodiment shown in FIG. 6, a step of performing fusion processing on images shot by the master camera module and the slave camera module to obtain a final shot image may be further included. Details are not described again.

Optionally, the adjusting an exposure frame rate of another slave camera module other than the target slave camera module in the slave camera modules, so that the exposure frame rate of the another slave camera module meets that the second exposure frame rate is an integer multiple of the exposure frame rate of the another slave camera module described in the foregoing embodiments may also indicate: The exposure frame rate of the another slave camera module other than the target slave camera module in the slave camera modules is adjusted, so that the second exposure frame rate and an exposure frame rate of any other slave camera module are in a multiple proportion relationship, and exposure frame rates of any two other slave camera modules are also in a multiple proportion relationship. This is not limited herein.

It should be noted that, although two camera modules and three camera modules are separately used as examples for description in the foregoing embodiments of this application, it should be understood that the image shooting method provided in embodiments of this application may be applicable to a scenario in which four camera modules or another quantity of camera modules perform collaborative image shooting. A quantity of camera modules is not limited in this application.

It should be understood that the foregoing embodiments are merely examples of the image shooting method according to embodiments of this application. In some other possible implementations, some execution steps may be deleted or added in the foregoing embodiments, or a sequence of some steps in the foregoing embodiments may be adjusted. This is not limited in this application.

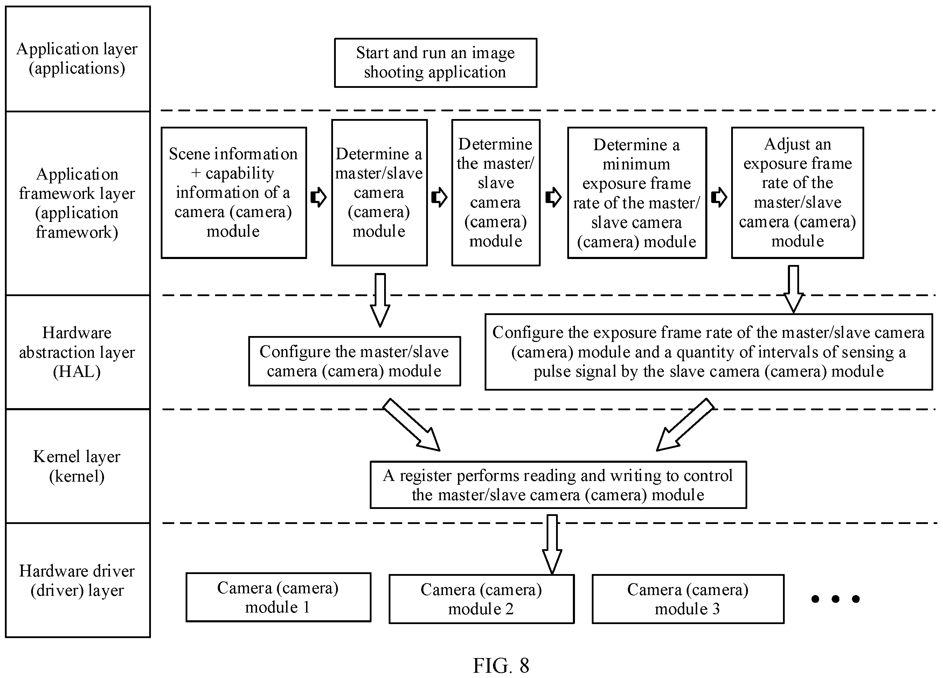

For example, FIG. 8 is a schematic diagram of an implementation principle of a software architecture of a terminal device according to an embodiment of this application. As shown in FIG. 8, in embodiments of this application, the software architecture of the terminal device may include an application layer (applications), an application framework (application framework) layer, a hardware abstract layer (hardware abstract layer, HAL), a kernel (kernel) layer, and a hardware driver (driver) layer.

The application layer may include a plurality of applications. For example, the application layer may include system applications such as Email, Messaging, Calendar, Map, Browser, and Contact management, and an image shooting application (for example, a Camera application).

In embodiments of this application, a function of determining, by the terminal device based on scene information corresponding to a current image shooting scene and capability information of camera modules configured on the terminal device, a master camera module and a slave camera module that are suitable for shooting the current image shooting scene from the camera modules configured on the terminal device, a function of determining minimum exposure frame rates of the master camera module and each slave camera module, and a function of determining actual exposure frame rates at which the master camera module and each slave camera module perform image shooting may be implemented at the application framework (application framework) layer. A function of configuring, by the terminal device, the master/slave camera module based on a decision result of the application framework layer, an exposure frame rate of the master/slave camera module, and a quantity of intervals of sensing a pulse signal by the slave camera module may be implemented at the hardware abstract layer (HAL). The kernel (kernel) layer may perform register read/write based on a configuration result of the hardware abstract layer (HAL), to control the exposure frame rate of the master/slave camera module, a frequency at which the master camera module sends the pulse signal, the quantity of intervals of sensing the pulse signal by the slave camera module, and the like. The hardware driver layer may invoke a corresponding camera module to implement a corresponding function based on read/write logic of a register. For example, the camera module may include a camera module 1, a camera module 2, a camera module 3, and the like.

Corresponding to the image shooting method in the foregoing embodiments, an embodiment of this application further provides an image shooting apparatus. The apparatus may be used in a terminal device, and is configured to implement the image shooting method in the foregoing embodiments. A function of the apparatus may be implemented by hardware, or may be implemented by executing corresponding software by hardware. The hardware or the software includes one or more modules or units corresponding to the foregoing function.

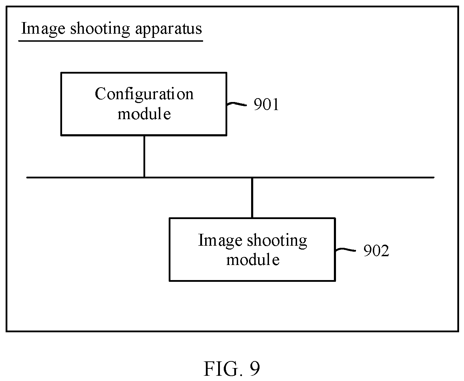

For example, FIG. 9 is a schematic diagram of a structure of an image shooting apparatus according to an embodiment of this application. As shown in FIG. 9, the apparatus may include a configuration module 901 and an image shooting module 902.

The configuration module 901 is configured to: determine a first camera module and a second camera module from configured camera modules; adjust an exposure frame rate of the first camera module to a first exposure frame rate; and adjust an exposure frame rate of the second camera module to a second exposure frame rate, where the first exposure frame rate is different from the second exposure frame rate.

The image shooting module 902 is configured to: control the first camera module to perform image shooting at the first exposure frame rate, and control the second camera module to perform collaborative image shooting with the first camera module at the second exposure frame rate.

The image shooting module 902 is specifically configured to: control the first camera module to start to shoot a first frame; and control the second camera module to start to shoot a second frame, where start time of the second frame is first duration later than start time of the first frame, and the first duration is related to the first exposure frame rate and the second exposure frame rate.

In some implementations, that the first duration is related to the first exposure frame rate and the second exposure frame rate includes: The first duration is equal to a difference between a frame length corresponding to a third exposure frame rate and a frame length corresponding to the second exposure frame rate. The third exposure frame rate is a largest value in all values that are less than or equal to the second exposure frame rate and that can exactly divide the first exposure frame rate.

Optionally, the image shooting module 902 is further configured to: control the first camera module to send the first signal after a delay of the first duration from the start time of the first frame; and control the second camera module to sense the first signal based on a configured quantity of intervals of sensing the first signal, and control, in response to the sensed first signal, the second camera module to start to shoot the second frame.

Optionally, the configuration module 901 is further configured to: configure, for the second camera module based on the first exposure frame rate and the second exposure frame rate, the quantity of intervals of sensing the first signal, and configure, for the first camera module based on the first exposure frame rate and the second exposure frame rate, time at which the first signal is sent to be delayed by the first duration from the start time of the first frame.

In some implementations, the quantity, configured for the second camera module, of intervals of sensing the first signal is equal to a value obtained by subtracting 1 from a quotient of dividing the first exposure frame rate by the third exposure frame rate.

In some implementations, the configuration module 901 is further configured to: determine a third camera module from the configured camera modules, and adjust an exposure frame rate of the third camera module, so that the exposure frame rate of the third camera module meets: the second exposure frame rate is an integer multiple of the exposure frame rate of the third camera module. The image shooting module 902 is further configured to: control the third camera module to perform collaborative image shooting with the first camera module and the second camera module at an adjusted exposure frame rate.

The image shooting module 902 is specifically configured to: control the third camera module to sense the first signal based on a configured quantity of intervals of sensing the first signal; and in response to the sensed first signal, control the third camera module to start to shoot a current frame.

Optionally, the configuration module 901 is further configured to: configure, for the third camera module based on the second exposure frame rate, the exposure frame rate of the third camera module, and the quantity, configured for the second camera module, of intervals of sensing the first signal, the quantity of intervals of sensing the first signal.

In some implementations, the quantity, configured for the third camera module, of intervals of sensing the first signal is equal to a sum of the quantity, configured for the second camera module, of intervals of sensing the first signal and a first value, and the first value is a value obtained by subtracting 1 from a quotient of dividing the second exposure frame rate by the exposure frame rate of the third camera module.

In some implementations, the configuration module 901 is further configured to: when detecting that scene information of an image shooting scene changes, adjust the exposure frame rate of the first camera module to a fourth exposure frame rate, and adjust the exposure frame rate of the second camera module to a fifth exposure frame rate. The image shooting module 902 is further configured to: control the first camera module to perform image shooting at the fourth exposure frame rate; and control the second camera module to perform collaborative image shooting with the first camera module at the fifth exposure frame rate.

The image shooting module 902 is specifically configured to: control the first camera module to start to shoot a third frame; and control the second camera module to start to shoot a fourth frame, where start time of the fourth frame is second duration later than start time of the third frame, and the second duration is related to the fourth exposure frame rate and the fifth exposure frame rate.

In some implementations, that the second duration is related to the fourth exposure frame rate and the fifth exposure frame rate includes: The second duration is equal to a difference between a frame length corresponding to a sixth exposure frame rate and a frame length corresponding to the fifth exposure frame rate. The sixth exposure frame rate is a largest value in all values that are less than or equal to the fifth exposure frame rate and that can exactly divide the fourth exposure frame rate.

Optionally, the image shooting module 902 is further configured to: control the first camera module to send the first signal after a delay of the second duration from the start time of the third frame; and control the second camera module to sense the first signal based on the configured quantity of intervals of sensing the first signal, and in response to the sensed first signal, control the second camera module to start to shoot the fourth frame.

Optionally, the configuration module 901 is further configured to: configure, for the first camera module based on the fourth exposure frame rate and the fifth exposure frame rate, time at which the first signal is sent to be delayed by the second duration from the start time of the third frame.

Optionally, the fourth exposure frame rate is less than or equal to Z times the fifth exposure frame rate, or Z times a frame length corresponding to the fourth exposure frame rate is greater than or equal to the frame length corresponding to the fifth exposure frame rate, where Z is equal to a value obtained by adding 1 to the quantity, configured for the second camera module, of intervals of sensing the first signal.

In some implementations, the image shooting module 902 is further configured to: perform fusion processing on the first frame and the second frame to obtain a first image.

Similarly, the image shooting apparatus may be configured to implement all functions of the image shooting method in the method embodiments. Details are not described again.

It should be understood that the apparatus may further include other modules or units configured to implement the image shooting method in the foregoing embodiments, for example, a display module, an auto exposure (auto exposure, AE) module, and a control module, which are not shown one by one herein.

It should be understood that division into units (or referred to as modules) in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units are implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms.

For another example, when the unit in the apparatus may be implemented by scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

In one implementation, a unit in the foregoing apparatus for implementing each corresponding step in the foregoing method may be implemented by scheduling a program by a processing element. For example, the apparatus may include a processing element and a storage element, and the processing element invokes a program stored in the storage element to execute the method described in the foregoing method embodiments. The storage element may be a storage element located on a same chip as the processing element, namely, an on-chip storage element.

In another implementation, a program configured to execute the foregoing method may be located on a storage element on a chip different from that for the processing element, namely, an off-chip storage element. In this case, the processing element invokes the program from the off-chip storage element or loads the program from the off-chip storage element onto an on-chip storage element, so as to invoke and execute the method described in the foregoing method embodiments.

For example, an embodiment of this application may further provide an apparatus, for example, an electronic device. The electronic device may include: a processor and a memory configured to store executable instructions of the processor. When the processor is configured to execute the instructions, the electronic device is enabled to implement the method described in the foregoing embodiments. The memory may be located inside the electronic device, or may be located outside the electronic device. In addition, there are one or more processors.

For example, the electronic device may be a mobile terminal with an image shooting function, for example, a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA), or may be a professional image shooting device like a digital camera, a single-lens reflex camera/micro-single camera, a motion camera, a pan-tilt-zoom camera, or an unmanned aerial vehicle. A specific type of the electronic device is not limited in embodiments of this application.

In still another implementation, a unit used by the apparatus to implement the steps in the foregoing methods may be configured as one or more processing elements. The processing element herein may be an integrated circuit, for example, one or more ASICs, one or more DSPs, one or more FPGAs, or a combination of these integrated circuits. These integrated circuits may be integrated together to form a chip.

For example, an embodiment of this application further provides a chip, and the chip may be used in the foregoing electronic device. The chip includes one or more interface circuits and one or more processors. The interface circuit and the processor are interconnected through a line. The processor receives computer instructions from a memory of an electronic device by using the interface circuit, and executes the computer instructions, to implement the method described in the foregoing embodiments.

An embodiment of this application further provides a computer program product, including computer readable code. When the computer readable code is run in an electronic device, the electronic device is enabled to implement the method described in the foregoing embodiments.

Based on the foregoing descriptions of the implementations, a person skilled in the art may clearly understand that for the purpose of convenient and brief descriptions, division into the foregoing function modules is merely used as an example for descriptions. In actual application, the foregoing functions can be allocated to different function modules for implementation based on a requirement, in other words, an inner structure of an apparatus is divided into different function modules to implement all or some of the functions described above.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a readable storage medium.

Based on such an understanding, the technical solutions of embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

For example, an embodiment of this application further provides a computer-readable storage medium, where the computer-readable storage medium stores computer program instructions. When the computer program instructions are executed by an electronic device, the electronic device is enabled to implement the method described in the foregoing embodiments.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image shooting method, wherein the method comprises:
determining, by a terminal device, a first camera module and a second camera module from configured camera modules;
adjusting, by the terminal device, an exposure frame rate of the first camera module to a first exposure frame rate, and adjusting an exposure frame rate of the second camera module to a second exposure frame rate, wherein the first exposure frame rate is different from the second exposure frame rate; and
controlling, by the terminal device, the first camera module to perform image shooting at the first exposure frame rate, and controlling the second camera module to perform collaborative image shooting with the first camera module at the second exposure frame rate, wherein
the controlling, by the terminal device, the first camera module to perform image shooting at the first exposure frame rate, and controlling the second camera module to perform collaborative image shooting with the first camera module at the second exposure frame rate comprises:
controlling, by the terminal device, the first camera module to start to shoot a first frame, and controlling the second camera module to start to shoot a second frame, wherein start time of the second frame is first duration later than start time of the first frame, and the first duration is related to the first exposure frame rate and the second exposure frame rate.

2. The method according to claim 1, wherein that the first duration is related to the first exposure frame rate and the second exposure frame rate comprises:
the first duration is equal to a difference between a frame length corresponding to a third exposure frame rate and a frame length corresponding to the second exposure frame rate, and the third exposure frame rate is a largest value in all values that are less than or equal to the second exposure frame rate and that can exactly divide the first exposure frame rate.

3. The method according to claim 2, wherein the method further comprises:
controlling, by the terminal device, the first camera module to send a first signal after a delay of the first duration from the start time of the first frame; and
the controlling, by the terminal device, the second camera module to start to shoot a second frame comprises:
controlling, by the terminal device, the second camera module to sense the first signal based on a configured quantity of intervals of sensing the first signal; and
controlling, by the terminal device in response to the sensed first signal, the second camera module to start to shoot the second frame.

4. The method according to claim 3, wherein the method further comprises:
configuring, by the terminal device for the second camera module based on the first exposure frame rate and the second exposure frame rate, the quantity of intervals of sensing the first signal, and configuring, for the first camera module based on the first exposure frame rate and the second exposure frame rate, time at which the first signal is sent to be delayed by the first duration from the start time of the first frame.

5. The method according to claim 3 or 4, wherein the quantity, configured for the second camera module, of intervals of sensing the first signal is equal to a value obtained by subtracting 1 from a quotient of dividing the first exposure frame rate by the third exposure frame rate.

6. The method according to any one of claims 3 to 5, wherein the method further comprises:
determining, by the terminal device, a third camera module from the configured camera modules;
adjusting, by the terminal device, an exposure frame rate of the third camera module, so that the exposure frame rate of the third camera module meets: the second exposure frame rate is an integer multiple of the exposure frame rate of the third camera module; and
controlling, by the terminal device, the third camera module to perform collaborative image shooting with the first camera module and the second camera module at an adjusted exposure frame rate, wherein
the controlling, by the terminal device, the third camera module to perform collaborative image shooting with the first camera module and the second camera module at an adjusted exposure frame rate comprises:
controlling, by the terminal device, the third camera module to sense the first signal based on a configured quantity of intervals of sensing the first signal; and
controlling, by the terminal device in response to the sensed first signal, the third camera module to start to shoot a current frame.

7. The method according to claim 6, wherein the method further comprises:
configuring, by the terminal device for the third camera module based on the second exposure frame rate, the exposure frame rate of the third camera module, and the quantity, configured for the second camera module, of intervals of sensing the first signal, the quantity of intervals of sensing the first signal.

8. The method according to claim 6 or 7, wherein the quantity, configured for the third camera module, of intervals of sensing the first signal is equal to a sum of the quantity, configured for the second camera module, of intervals of sensing the first signal and a first value, and the first value is a value obtained by subtracting 1 from a quotient of dividing the second exposure frame rate by the exposure frame rate of the third camera module.

9. The method according to any one of claims 1 to 8, wherein the method further comprises:
when detecting that scene information of an image shooting scene changes, adjusting, by the terminal device, the exposure frame rate of the first camera module to a fourth exposure frame rate, and adjusting the exposure frame rate of the second camera module to a fifth exposure frame rate; and
controlling, by the terminal device, the first camera module to perform image shooting at the fourth exposure frame rate, and controlling the second camera module to perform collaborative image shooting with the first camera module at the fifth exposure frame rate, wherein
the controlling, by the terminal device, the first camera module to perform image shooting at the fourth exposure frame rate, and controlling the second camera module to perform collaborative image shooting with the first camera module at the fifth exposure frame rate comprises:
controlling, by the terminal device, the first camera module to start to shoot a third frame, and controlling the second camera module to start to shoot a fourth frame, wherein start time of the fourth frame is second duration later than start time of the third frame, and the second duration is related to the fourth exposure frame rate and the fifth exposure frame rate.

10. The method according to claim 9, wherein that the second duration is related to the fourth exposure frame rate and the fifth exposure frame rate comprises:
the second duration is equal to a difference between a frame length corresponding to a sixth exposure frame rate and a frame length corresponding to the fifth exposure frame rate, and the sixth exposure frame rate is a largest value in all values that are less than or equal to the fifth exposure frame rate and that can exactly divide the fourth exposure frame rate.

11. The method according to claim 10, wherein the method further comprises:
controlling, by the terminal device, the first camera module to send the first signal after a delay of the second duration from the start time of the third frame; and
the controlling, by the terminal device, the second camera module to start to shoot a fourth frame comprises:
controlling, by the terminal device, the second camera module to sense the first signal based on the configured quantity of intervals of sensing the first signal; and
controlling, by the terminal device in response to the sensed first signal, the second camera module to start to shoot the fourth frame.

12. The method according to claim 11, wherein the method further comprises:
configuring, by the terminal device for the first camera module based on the fourth exposure frame rate and the fifth exposure frame rate, time at which the first signal is sent to be delayed by the second duration from the start time of the third frame.

13. The method according to any one of claims 9 to 12, wherein the fourth exposure frame rate is less than or equal to Z times the fifth exposure frame rate, or Z times a frame length corresponding to the fourth exposure frame rate is greater than or equal to the frame length corresponding to the fifth exposure frame rate, wherein
Z is equal to a value obtained by adding 1 to the quantity, configured for the second camera module, of intervals of sensing the first signal.

14. The method according to any one of claims 1 to 13, wherein the method further comprises:
performing, by the terminal device, fusion processing on the first frame and the second frame to obtain a first image.

15. An image shooting apparatus, wherein the apparatus comprises:
a configuration module, configured to: determine a first camera module and a second camera module from configured camera modules, adjust an exposure frame rate of the first camera module to a first exposure frame rate, and adjust an exposure frame rate of the second camera module to a second exposure frame rate, wherein the first exposure frame rate is different from the second exposure frame rate; and
an image shooting module, configured to: control the first camera module to perform image shooting at the first exposure frame rate, and control the second camera module to perform collaborative image shooting with the first camera module at the second exposure frame rate, wherein
the image shooting module is specifically configured to: control the first camera module to start to shoot a first frame, and control the second camera module to start to shoot a second frame, wherein start time of the second frame is first duration later than start time of the first frame, and the first duration is related to the first exposure frame rate and the second exposure frame rate.

16. An electronic device, comprising a processor and a memory configured to store instructions executable by the processor, wherein
when the processor is configured to execute the instructions, the electronic device is enabled to implement the method according to any one of claims 1 to 14.

17. A computer-readable storage medium, storing computer program instructions, wherein
when the computer program instructions are executed by an electronic device, the electronic device is enabled to implement the method according to any one of claims 1 to 14.
